(19)

Europäisches Patentamt
European Patent Office
Office européen des brevets

(11)  **EP 4 535 740 A1**

(12)  **EUROPEAN PATENT APPLICATION**
published in accordance with Art. 153(4) EPC

(43) Date of publication:
**09.04.2025  Bulletin 2025/15**

(21) Application number: **23822889.4**

(22) Date of filing: **23.05.2023**

(51) International Patent Classification (IPC):
**H04L 27/26** *(2006.01)*

(52) Cooperative Patent Classification (CPC):
**H04L 27/04; H04L 27/06; H04L 27/12; H04L 27/14; H04L 27/26**

(86) International application number:
**PCT/CN2023/095749**

(87) International publication number:
**WO 2023/241319 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **16.06.2022  CN 202210682571**

(71) Applicant: **Huawei Technologies Co., Ltd.
Shenzhen, Guangdong 518129 (CN)**

(72) Inventors:
• **QU, Weilin
  Shenzhen, Guangdong 518129 (CN)**
• **CHEN, Jun
  Shenzhen, Guangdong 518129 (CN)**
• **WU, Yiling
  Shenzhen, Guangdong 518129 (CN)**
• **JIN, Zhe
  Shenzhen, Guangdong 518129 (CN)**

(74) Representative: **Maiwald GmbH
Engineering
Elisenhof
Elisenstrasse 3
80335 München (DE)**

(54)  **COMMUNICATION METHOD AND COMMUNICATION APPARATUS**

(57)  This application provides a communication method and a communication apparatus. In the method, M amplitude shift keying modulation symbols included in a first signal sent by a signal sending device are the same as M amplitude shift keying modulation symbols included in a second signal. In addition, bandwidth occupied by a first frequency domain signal of the first signal in frequency domain is half of that occupied by a second frequency domain signal of the second signal in frequency domain. In addition, the first signal is one OFDM symbol in time domain, and duration of the M amplitude shift keying modulation symbols carried by the first signal is the same as that of the M amplitude shift keying modulation symbols carried by the second signal. In other words, bandwidth occupied by a signal sent by the signal sending device is reduced by half. Therefore, in an OFDM system, bandwidth of a signal that is obtained through amplitude shift keying modulation and that is sent by the signal sending device is reduced by half, thereby effectively improving spectral efficiency of the signal, to improve communication efficiency.

```
┌──────────────────┐          ┌──────────────────┐
│  Signal sending  │          │ Signal receiving │
│      device      │          │      device      │
└──────────────────┘          └──────────────────┘
         │                             │
  ┌──────────────────────────┐        │
  │ S401: Generate a first   │        │
  │        signal            │        │
  └──────────────────────────┘        │
         │                             │
         │      S402: First signal     │
         │ ──────────────────────────> │
         │                             │
```

FIG. 4

**Description**

This application claims priority to Chinese Patent Application No. 202210682571.2, filed with the China National Intellectual Property Administration on June 16, 2022 and entitled "COMMUNICATION METHOD AND COMMUNICATION APPARATUS", which is incorporated herein by reference in its entirety.

**TECHNICAL FIELD**

This application relates to the field of wireless technologies, and in particular, to a communication method and a communication apparatus.

**BACKGROUND**

Low-power internet of things (Internet of Things, IoT) communication is an important research direction in future 5G and 6G. In low-power internet of things, terminal devices include a passive internet of things terminal device, a semi-passive terminal device, a partially-active internet of things terminal device, and the like. A passive internet of things device and a semi-passive internet of things device may also be referred to as backscatter (Backscatter) communication devices.

A terminal device serving as a passive tag is used as an example. The terminal device has no energy supply module or energy supply circuit, and an internal circuit of the terminal device is excited by using a received downlink signal to obtain energy supply, so as to enable further demodulation of a subsequent downlink signal and reflection of a subsequent uplink (modulation) signal.

Currently, in the low-power internet of things, the terminal device may not have a capability of accurately generating a local high-frequency carrier. Consequently, the terminal device cannot perform signal demodulation through coherent demodulation, and can perform signal demodulation only in a non-coherent demodulation scheme, for example, envelope detection demodulation, to reduce demodulation power consumption and implementation complexity of the terminal device. Because amplitude shift keying (amplitude shift keying, ASK) modulation has a feature of amplitude modulation information, a terminal device in a low-power internet of things scenario is enabled to perform envelope detection demodulation. Therefore, sending and receiving of an amplitude shift keying modulation signal need to be supported in an orthogonal frequency division multiplexing (orthogonal frequency division multiplexing, OFDM) system in the low-power internet of things scenario.

However, in a process of generating the amplitude shift keying modulation signal in the OFDM system, because the amplitude shift keying modulation signal is a real signal, and a corresponding frequency domain signal is conjugate symmetric, only half of the frequency domain signal is actually valid. In other words, half of bandwidth of an amplitude shift keying modulation signal actually generated in the OFDM system is wasted. Consequently, spectral efficiency of transmission of the amplitude shift keying signal in the OFDM system is low, and communication transmission efficiency is affected.

**SUMMARY**

This application provides a communication method and a communication apparatus, to improve communication efficiency.

A first aspect of this application provides a communication method. The method is performed by a signal sending device, the method is performed by some components (for example, a processor, a chip, or a chip system) in the signal sending device, or the method may be implemented by a logic module or software that can implement all or some functions of the signal sending device. In the first aspect and possible implementations of the first aspect, an example in which the communication method is performed by the signal sending device is used for description. The signal sending device may be a network device or a terminal device. In the method, the signal sending device generates a first signal, where the first signal carries M amplitude shift keying modulation symbols, the first signal is one orthogonal frequency division multiplexing (orthogonal frequency division multiplexing, OFDM) symbol in time domain, the first signal is a first frequency domain signal in frequency domain, bandwidth occupied by the first frequency domain signal is half of that occupied by a second frequency domain signal, the second frequency domain signal is a second signal in time domain, the second signal carries the M amplitude shift keying modulation symbols, duration of the M amplitude shift keying modulation symbols carried by the first signal is the same as that of the M amplitude shift keying modulation symbols carried by the second signal, and M is a positive integer. The signal sending device sends the first signal.

In this application, amplitude shift keying modulation includes binary amplitude shift keying (binary amplitude shift keying, 2ASK) modulation or on-off keying (On-Off Keying, OOK) modulation.

According to the foregoing technical solution, the M amplitude shift keying modulation symbols included in the first signal sent by the signal sending device are the same as the M amplitude shift keying modulation symbols included in the second signal. In addition, the bandwidth occupied by the first frequency domain signal of the first signal in frequency domain is half of that occupied by the second frequency domain signal of the second signal in frequency domain. In addition, the first signal is one OFDM symbol in time domain, and the duration of the M amplitude shift keying modulation symbols carried by the first signal is the same as that of the M amplitude shift keying modulation symbols carried by the second signal. In other words, a symbol rate of the amplitude shift keying modulation symbol included in the first signal is the same as that of the amplitude shift keying modulation symbol included in the second signal. In addition, the bandwidth occupied by the first frequency domain signal corresponding to the first signal sent by the signal sending device is reduced to half of that occupied by the second frequency domain signal of the second signal in frequency domain. Therefore, in an OFDM system, bandwidth of a signal that is obtained through amplitude shift keying modulation and that is sent by the signal sending device is reduced by half, thereby effectively improving spectral efficiency of the signal, to improve communication efficiency.

A second aspect of this application provides a communication method. The method is performed by a signal receiving device, the method is performed by some components (for example, a processor, a chip, or a chip system) in the signal receiving device, or the method may be implemented by a logic module or software that can implement all or some functions of the signal receiving device. In the second aspect and possible implementations of the second aspect, an example in which the communication method is performed by the signal receiving device is used for description. The signal receiving device may be a terminal device. In the method, the signal receiving device receives a first signal, where the first signal carries M amplitude shift keying modulation symbols, the first signal is one OFDM symbol in time domain, the first signal is a first frequency domain signal in frequency domain, bandwidth occupied by the first frequency domain signal is half of that occupied by a second frequency domain signal, the second frequency domain signal is a second signal in time domain, the second signal carries the M amplitude shift keying modulation symbols, duration of the M amplitude shift keying modulation symbols carried by the first signal is the same as that of the M amplitude shift keying modulation symbols carried by the second signal, and M is a positive integer. The signal receiving device determines the M amplitude shift keying modulation symbols based on the first signal.

It should be understood that, because the modulation symbol is used to carry bit information, an implementation process in which the signal receiving device determines the M amplitude shift keying modulation symbols based on the first signal may alternatively be expressed as that the signal receiving device determines, based on the first signal, bit information corresponding to the M amplitude shift keying modulation symbols.

According to the foregoing technical solution, the M amplitude shift keying modulation symbols included in the first signal received by the signal receiving device are the same as the M amplitude shift keying modulation symbols included in the second signal. In addition, the bandwidth occupied by the first frequency domain signal of the first signal in frequency domain is half of that occupied by the second frequency domain signal of the second signal in frequency domain. In addition, the first signal is one OFDM symbol in time domain, and the duration of the M amplitude shift keying modulation symbols carried by the first signal is the same as that of the M amplitude shift keying modulation symbols carried by the second signal. In other words, a symbol rate of the amplitude shift keying modulation symbol included in the first signal is the same as that of the amplitude shift keying modulation symbol included in the second signal. In addition, the bandwidth occupied by the first frequency domain signal corresponding to the first signal received by the signal receiving device is reduced to half of that occupied by the second frequency domain signal of the second signal in frequency domain. Therefore, in an OFDM system, in the foregoing technical solution, under a criterion of ensuring subcarrier orthogonalization when an amplitude shift keying modulation signal is sent, bandwidth of a signal that is obtained through amplitude shift keying modulation and that is sent by a signal sending device is reduced by half, thereby effectively improving spectral efficiency of the signal, to improve communication efficiency.

It should be noted that the M amplitude shift keying modulation symbols carried by the first signal are the same as the M amplitude shift keying modulation symbols carried by the second signal. In other words, the bit information corresponding to the M amplitude shift keying modulation symbols carried by the first signal is the same as that corresponding to the M amplitude shift keying modulation symbols carried by the second signal.

In a possible implementation of the first aspect or the second aspect, that duration of the M amplitude shift keying modulation symbols carried by the first signal is the same as that of the M amplitude shift keying modulation symbols carried by the second signal includes at least one of the following: Duration of each of the M amplitude shift keying modulation symbols carried by the first signal is the same as that of each of the M amplitude shift keying modulation symbols carried by the second signal; or duration of an $i^{th}$ amplitude shift keying modulation symbol in the M amplitude shift keying modulation symbols carried by the first signal is the same as that of an $i^{th}$ amplitude shift keying modulation symbol in the M amplitude shift keying modulation symbols carried by the second signal, where i is a positive integer, and i is less than or equal to M.

Optionally, the second signal is one OFDM symbol in time domain.

According to the foregoing technical solution, the symbol rate of the amplitude shift keying modulation symbol included in the first signal is the same as that of the amplitude shift keying modulation symbol included in the second signal. The symbol rates of the first signal and the second signal remain unchanged, so that it can be ensured that differences between signal waveforms and modulation signal waveforms corresponding to the first signal and the second signal are small. This ensures signal transmission performance while improving transmission spectral efficiency.

In a possible implementation of the first aspect or the second aspect, the second frequency domain signal is a signal whose amplitude value is symmetrical about a first subcarrier, and a quantity of subcarriers of the bandwidth occupied by the second frequency domain signal is N.

When N is an even number, the first subcarrier is an $(N/2)^{th}$ subcarrier or an $((N/2)+1)^{th}$ subcarrier.

Optionally, when N is the even number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the even number, a start location of the bandwidth occupied by the first frequency domain signal is a $2^{nd}$ subcarrier of the bandwidth occupied by the second frequency domain signal, and an end location of the bandwidth occupied by the first frequency domain signal is the first subcarrier.

When N is an odd number, the first subcarrier is an $(\lfloor N/2 \rfloor + 1)^{th}$ subcarrier, and $\lfloor N/2 \rfloor$ represents taking the floor of N/2.

Optionally, when N is the odd number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the odd number, a start location of the bandwidth occupied by the first frequency domain signal is a $1^{st}$ subcarrier of the bandwidth occupied by the second frequency domain signal, and an end location of the bandwidth occupied by the first frequency domain signal is the first subcarrier.

Optionally, signals to which the first frequency domain signal and the second frequency domain signal are mapped in the bandwidth occupied by the first frequency domain signal are the same. In the manner, transmission of the M amplitude shift keying modulation symbols can be effectively performed while half of bandwidth of a sent signal can be saved. In the manner of directly taking half of the first frequency domain signal as the second frequency domain signal, under the criterion of ensuring the subcarrier orthogonalization when the amplitude shift keying modulation signal is sent, not only the transmission spectral efficiency of the amplitude shift keying modulation signal is improved, but also implementation and calculation complexity of sending the amplitude shift keying modulation signal by the signal sending device is not increased.

According to the foregoing technical solution, the signal (that is, the second frequency domain signal) of the second signal in frequency domain is the signal whose amplitude value is symmetrical about the first subcarrier, and the bandwidth occupied by the signal (that is, the first frequency domain signal) of the first signal in frequency domain, the first subcarrier, and the bandwidth occupied by the second frequency domain signal meet the foregoing relationship. In other words, the bandwidth occupied by the first frequency domain signal is half of that occupied by the second frequency domain signal. Therefore, only half of bandwidth of an original frequency domain signal is needed to carry a same amplitude shift keying modulation symbol in time domain, so that the transmission spectral efficiency of the amplitude shift keying modulation signal is improved.

Optionally, that "a start location of the bandwidth occupied by the first frequency domain signal is the first subcarrier, and an end location of the bandwidth occupied by the first frequency domain signal is a last subcarrier of the bandwidth occupied by the second frequency domain signal; or a start location of the bandwidth occupied by the first frequency domain signal is a $1^{st}$ subcarrier of the bandwidth occupied by the second frequency domain signal, and an end location of the bandwidth occupied by the first frequency domain signal is the first subcarrier" may be expressed as that "the first frequency domain signal is a first half of the second frequency domain signal; or the first frequency domain signal is a second half of the second frequency domain signal"; may be expressed as that "the first frequency domain signal is the same as a first half of the second frequency domain signal; or the first frequency domain signal is the same as a second half of the second frequency domain signal"; or may be expressed as that "the first frequency domain signal is a frequency domain signal that includes the first subcarrier in the second frequency domain signal and that is mapped to a first half of the first subcarrier; or the first frequency domain signal is a frequency domain signal that includes the first subcarrier in the second frequency domain signal and that is mapped to a second half of the first subcarrier".

Optionally, the quantity of subcarriers of the bandwidth occupied by the second frequency domain signal is N, and numbers (or indexes) of the N subcarriers are contiguous. In other words, the bandwidth occupied by the second frequency domain signal includes N contiguously numbered (or indexed) subcarriers. Alternatively, the quantity of subcarriers of the bandwidth occupied by the second frequency domain signal is N, numbers (or indexes) of the N subcarriers are discontiguous, and the N discontiguously numbered subcarriers may be re-sorted to obtain N contiguously numbered subcarriers. Correspondingly, the first subcarrier is determined based on the N contiguously numbered (or indexed) subcarriers.

Optionally, the start location of the bandwidth may alternatively be expressed as a location of a $1^{st}$ subcarrier of the bandwidth, a subcarrier start location of the bandwidth, or another expression. This is not limited herein. Similarly, the end location of the bandwidth may alternatively be expressed as a location of a last subcarrier of the bandwidth, a subcarrier end location of the bandwidth, a subcarrier termination location of the bandwidth, a termination location of the bandwidth, or another expression. This is not limited herein.

In a possible implementation of the first aspect or the second aspect, the first signal meets at least one of the following: A difference between a ratio of an amplitude value of a high level to an amplitude value of a low level in the first signal and a natural constant e is less than or equal to a first value, where the natural constant e is approximately equal to 2.718; an amplitude value of a high-level signal in the first signal is associated with an amplitude value of a high-level signal in the second signal, and an amplitude value of a low-level signal in the first signal is associated with an amplitude value of a low-level signal in the second signal; an amplitude value of a high-level signal in the first signal is higher than an amplitude value of a high-level signal in the second signal; or an amplitude value of a low-level signal in the first signal is higher than an amplitude value of a low-level signal in the second signal.

According to the foregoing technical solution, when the first signal and the second signal carry the same M amplitude shift keying modulation symbols, the signal sending device increases at least one of the amplitude value of the high-level signal in the second signal and the amplitude value of the low-level signal in the second signal, to obtain the amplitude value of the first signal through conversion.

Optionally, the first value is 0 or a value close to 0, for example, 0.1, 0.2, or 0.3. When the first value is close to 0, the first value depends on a magnitude of an error. The error may include an error of an internal device of the signal sending device (or the signal receiving device), a quantization error generated in a process in which the signal sending device obtains the first signal through mapping of a quadrature amplitude modulation (quadrature amplitude modulation, QAM) or phase shift keying (phase shift keying, PSK) modulation symbol, a mathematical operation approximation error (for example, an error generated in a series expansion operation) generated in a process in which the signal sending device generates the first signal, and another error. This is not limited herein. Herein, a specific error is allowed between the first value and 0. This better helps the signal sending device reduce implementation complexity and storage overheads of sending the first signal. For example, an existing QAM or PSK modulation symbol is used for mapping and sending, and no additional modulation symbol needs to be defined, thereby reducing the storage overheads of the signal sending device.

In a possible implementation of the first aspect or the second aspect, a signal obtained through Hilbert transform of the second signal is a third signal, and a phase of the first signal is associated with the third signal.

According to the foregoing technical solution, when the first signal and the second signal carry the same M amplitude shift keying modulation symbols, the signal sending device converts the signal (that is, the third signal) obtained through the Hilbert transform of the second signal into the phase of the first signal. The first signal has an I-channel signal and a Q-channel signal that are in quadrature with each other. In a manner of converting a signal obtained through Hilbert transform of the Q-channel signal into the signal phase, impact of the signal obtained through the Hilbert transform on envelope detection demodulation performance of the first signal can be eliminated. In the manner, the first signal has a feature of improving the spectral efficiency, and also improves the demodulation performance of the first signal received by the signal receiving device. This improves communication reliability while improving the communication efficiency, and further increases a coverage distance of communication transmission of the first signal.

In a possible implementation of the first aspect or the second aspect, that a phase of the first signal is associated with the third signal includes: A value of the phase of the first signal is equal to that of the third signal, or a value of the phase of the first signal is directly proportional to that of the third signal.

According to the foregoing technical solution, the value of the phase of the first signal sent by the signal sending device is equal to that of the third signal, or the value of the phase of the first signal sent by the signal sending device is directly proportional to that of the third signal. Therefore, when the first signal and the second signal carry the same M amplitude shift keying modulation symbols, the signal sending device determines, as the phase of the first signal, the value (or a value that is in direct proportion to the value) of the signal (that is, the third signal) obtained through the Hilbert transform of the second signal, to eliminate the impact of the signal obtained through the Hilbert transform on the envelope detection demodulation performance of the first signal.

In a possible implementation of the first aspect or the second aspect, the phase of the first signal is equal to the third signal, the ratio of the high level to the low level in the first signal is equal to $e^{z1}/e^{z2}$, and $z1$ and $z2$ are equal to values of the high level and the low level in the second signal. For example, the first signal satisfies:

$$a(t) = e^{s(t)+j\hat{s}(t)}.$$

$a(t)$ represents the first signal, e is the natural constant, $s(t)$ represents the second signal, and $\hat{s}(t)$ represents the third signal.

It should be noted that $a(t) = e^{s(t)+j\hat{s}(t)}$ may alternatively be represented as:

$$a(t) = 1 + m(t) + m(t)^2/2 \text{ or } a(t) = 1 + m(t).$$

m(t) satisfies:

$$m(t) = s(t) + j\hat{s}(t).$$

a(t) represents the first signal, e is the natural constant, s(t) represents the second signal, and $\hat{s}(t)$ represents the third signal.

It should be understood that, in actual application of the solution, the signal sending device may generate the first signal according to any one of the foregoing plurality of implementations of the first signal, and a specific signal deviation may be generated in the process of generating the first signal. The signal deviation may be generated due to the error of the internal device of the signal sending device, the quantization error generated in the process in which the signal sending device obtains the first signal through the mapping of the QAM or PSK modulation symbol, the mathematical operation approximation error (for example, the error generated in the series expansion operation) generated in the process in which the signal sending device generates the first signal, and the another error that may exist. This is not limited herein.

According to the foregoing technical solution, although the signal sending device sacrifices a specific ratio of a high level to a low level in the amplitude shift keying modulation signal, that is, a modulation depth of the amplitude shift keying modulation, the spectral efficiency of sending the amplitude shift keying modulation signal is effectively improved in the solution. In addition, in a manner of transferring the value of the signal obtained through the Hilbert transform of the second signal to a phase domain of the first signal, the impact of the signal obtained through the Hilbert transform on the envelope detection demodulation performance of the first signal is effectively eliminated.

In a possible implementation of the first aspect, the method further includes: The signal sending device sends first indication information, where the first indication information indicates that a signal modulation scheme is a single sideband modulation scheme.

According to the foregoing technical solution, an implementation of introducing a signal obtained through Hilbert transform of a to-be-sent signal is used to reduce a spectrum resource occupied by the to-be-sent signal. Before the elimination, the to-be-sent signal may be referred to as a double sideband modulation signal, and after the elimination, the to-be-sent signal may be referred to as a single sideband modulation signal. Because the first signal sent by the signal sending device is a signal after the elimination, the signal sending device may further send the first indication information indicating that the signal modulation scheme is the single sideband modulation scheme, so that the signal receiving device receives and parses the first signal.

In a possible implementation of the second aspect, the method further includes: The signal receiving device receives first indication information, where the first indication information indicates that a signal modulation scheme is a single sideband modulation scheme.

According to the foregoing technical solution, in a process in which an implementation of introducing a signal obtained through Hilbert transform of a to-be-sent signal is used to eliminate a wasted part in a spectrum resource of the to-be-sent signal, before the elimination, the to-be-sent signal may be referred to as a double sideband modulation signal, and after the elimination, the to-be-sent signal may be referred to as a single sideband modulation signal. Because the first signal sent by the signal sending device is a signal after the elimination, the signal receiving device may further receive the first indication information indicating that the signal modulation scheme is the single sideband modulation scheme, so that the signal receiving device receives and parses the first signal based on the first indication information, to determine bit information corresponding to the first signal.

Optionally, the first indication information is carried in a preamble sequence, downlink control information (downlink control information, DCI), common signaling (for example, paging information or group paging information), common media access control (media access control, MAC) signaling, or radio resource control (radio resource control, RRC) signaling, or the first indication information is carried in another message or other signaling. This is not limited herein.

A third aspect of embodiments of this application provides a communication method. The method is performed by a signal sending device, the method is performed by some components (for example, a processor, a chip, or a chip system) in the signal sending device, or the method may be implemented by a logic module or software that can implement all or some functions of the signal sending device. In the first aspect and possible implementations of the first aspect, an example in which the communication method is performed by the signal sending device is used for description. The signal sending device may be a network device or a terminal device. In the method, the signal sending device generates a first signal, where both the first signal and a second signal are amplitude shift keying modulation signals, a signal obtained through Hilbert transform of the second signal is a third signal, a phase of the first signal is associated with the third signal, and the first signal meets at least one of the following: A difference between a ratio of an amplitude value of a high level to an amplitude value of a low level in the first signal and a natural constant e is less than or equal to a first value; or an amplitude value of a high-level signal in the first signal is associated with an amplitude value of a high-level signal in the second signal, and an amplitude value of a low-level signal in the first signal is associated with an amplitude value of a low-level signal in the second signal. The signal sending device sends the first signal.

According to the foregoing technical solution, for the phase of the first signal sent by the signal sending device, the phase is associated with the third signal, that is, associated with the signal obtained through the Hilbert transform of the second signal. For the signal amplitude value of the first signal sent by the signal sending device, the difference between the ratio of the amplitude value of the high level to the amplitude value of the low level in the first signal and the natural constant e is less than or equal to the first value; or the amplitude value of the high-level signal in the first signal is associated with the amplitude value of the high-level signal in the second signal, and the amplitude value of the low-level signal in the first signal is associated with the amplitude value of the low-level signal in the second signal. In other words, when the first signal and the second signal carry a same amplitude shift keying modulation symbol, when the signal sending device converts the signal (that is, the third signal) obtained through the Hilbert transform of the second signal into the phase of the first signal, the amplitude value of the second signal is affected, that is, the amplitude value of the second signal is converted into the amplitude value of the first signal. In addition, both the first signal and the second signal are the amplitude shift keying modulation signals. In this way, in a manner in which the first signal sent by the signal sending device is the amplitude shift keying modulation signal, a signal receiving device can be supported in performing demodulation in a non-coherent demodulation scheme. In addition, in a manner of converting the signal obtained through the Hilbert transform into a phase shift, impact of the signal obtained through the Hilbert transform on envelope detection demodulation performance can be reduced or eliminated, thereby improving performance of demodulating a received signal by the signal receiving device, to improve communication efficiency.

A fourth aspect of embodiments of this application provides a communication method. The method is performed by a signal receiving device, the method is performed by some components (for example, a processor, a chip, or a chip system) in the signal receiving device, or the method may be implemented by a logic module or software that can implement all or some functions of the signal receiving device. In the fourth aspect and possible implementations of the fourth aspect, an example in which the communication method is performed by the signal receiving device is used for description. The signal receiving device may be a terminal device, for example, a terminal device serving as a passive tag or a terminal device serving as a semi-passive tag. In the method, the signal receiving device receives a first signal, where a phase of the first signal is associated with a third signal, the third signal is a signal obtained through Hilbert transform of a second signal, both the first signal and the second signal are amplitude shift keying modulation signals, and the first signal meets at least one of the following: A difference between a ratio of an amplitude value of a high level to an amplitude value of a low level in the first signal and a natural constant e is less than or equal to a first value; or an amplitude value of a high-level signal in the first signal is associated with an amplitude value of a high-level signal in the second signal, and an amplitude value of a low-level signal in the first signal is associated with an amplitude value of a low-level signal in the second signal. The signal receiving device determines bit information corresponding to the first signal.

According to the foregoing technical solution, for the phase of the first signal received by the signal receiving device, the phase is associated with the third signal, that is, associated with the signal obtained through the Hilbert transform of the second signal. For the signal amplitude value of the first signal received by the signal receiving device, the difference between the ratio of the amplitude value of the high level to the amplitude value of the low level in the first signal and the natural constant e is less than or equal to the first value; or the amplitude value of the high-level signal in the first signal is associated with the amplitude value of the high-level signal in the second signal, and the amplitude value of the low-level signal in the first signal is associated with the amplitude value of the low-level signal in the second signal. In other words, when the first signal and the second signal carry a same amplitude shift keying modulation symbol, when a signal sending device converts the signal (that is, the third signal) obtained through the Hilbert transform of the second signal into the phase of the first signal, the amplitude value of the second signal is affected, that is, the amplitude value of the second signal is converted into the amplitude value of the first signal. In addition, both the first signal and the second signal are the amplitude shift keying modulation signals. In this way, in a manner in which the first signal received by the signal receiving device is the amplitude shift keying modulation signal, demodulation can be supported in a non-coherent demodulation scheme. In addition, in a manner of converting the signal obtained through the Hilbert transform into a phase shift, impact of the signal obtained through the Hilbert transform on envelope detection demodulation performance can be reduced or eliminated, thereby improving performance of demodulating the received signal by the signal receiving device, to improve communication efficiency.

Optionally, the first value is 0 or a value close to 0, for example, 0.1, 0.2, or 0.3. When the first value is close to 0, the first value depends on a magnitude of an error. The error may include an error of an internal device of the signal sending device (or the signal receiving device), a quantization error generated in a process in which the signal sending device obtains the first signal through mapping of a QAM or PSK modulation symbol, a mathematical operation approximation error (for example, an error generated in a series expansion operation) generated in a process in which the signal sending device generates the first signal, and another error. This is not limited herein.

In a possible implementation of the third aspect or the fourth aspect, the first signal meets at least one of the following: The amplitude value of the high-level signal in the first signal is higher than the amplitude value of the high-level signal in the second signal; or the amplitude value of the low-level signal in the first signal is higher than the amplitude value of the low-level signal in the second signal.

According to the foregoing technical solution, that an amplitude value of a high-level signal in the first signal is associated with an amplitude value of a high-level signal in the second signal, and an amplitude value of a low-level signal in the first signal is associated with an amplitude value of a low-level signal in the second signal includes: The amplitude value of the high-level signal in the first signal is higher than the amplitude value of the high-level signal in the second signal; or the amplitude value of the low-level signal in the first signal is higher than the amplitude value of the low-level signal in the second signal. Therefore, when the first signal and the second signal carry the same amplitude shift keying modulation symbol, when converting the signal (that is, the third signal) obtained through the Hilbert transform of the second signal into the phase of the first signal, the signal sending device increases at least one of the amplitude value of the high-level signal in the second signal and the amplitude value of the low-level signal in the second signal, to obtain the amplitude value of the first signal through conversion.

In a possible implementation of the third aspect or the fourth aspect, a signal of the first signal in frequency domain is a first frequency domain signal, and a signal of the second signal in frequency domain is a second frequency domain signal, where bandwidth occupied by the second frequency domain signal is twice that occupied by the first frequency domain signal.

According to the foregoing technical solution, the bandwidth occupied by the second frequency domain signal is twice that occupied by the first frequency domain signal. That is, bandwidth occupied by the signal of the second signal in frequency domain is twice that occupied by the signal of the first signal in frequency domain. When the first signal and the second signal carry the same amplitude shift keying modulation symbol, bandwidth occupied by the first signal actually sent by the signal sending device is reduced to half of that occupied by the second signal, to improve spectral efficiency.

In a possible implementation of the third aspect or the fourth aspect, the third signal is an imaginary part of a fourth signal, and the second signal is a real part of the fourth signal. The signal of the second signal in frequency domain is the second frequency domain signal, and a signal of the fourth signal in frequency domain is a third frequency domain signal, where the bandwidth occupied by the second frequency domain signal is twice that occupied by the third frequency domain signal.

According to the foregoing technical solution, the bandwidth occupied by the second frequency domain signal is twice that occupied by the third frequency domain signal. That is, the bandwidth occupied by the signal of the second signal in frequency domain is twice that occupied by the signal of the fourth signal in frequency domain. In other words, bandwidth occupied by the fourth signal is enabled, based on IQ superimposition of the third signal and the second signal, to be reduced by half compared with that occupied by the second signal, so that spectral efficiency of the fourth signal used as a transmission signal is twice that of the second signal used as a transmission signal.

In a possible implementation of the third aspect or the fourth aspect, the second frequency domain signal is a signal whose amplitude value is symmetrical about a first subcarrier, and a quantity of subcarriers of the bandwidth occupied by the second frequency domain signal is N.

When N is an even number, the first subcarrier is an $(N/2)^{th}$ subcarrier or an $((N/2) + 1)^{th}$ subcarrier.

Optionally, when N is the even number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the even number, a start location of the bandwidth occupied by the first frequency domain signal is a $2^{nd}$ subcarrier of the bandwidth occupied by the second frequency domain signal, and an end location of the bandwidth occupied by the first frequency domain signal is the first subcarrier.

When N is an odd number, the first subcarrier is an $(\lfloor N/2 \rfloor + 1)^{th}$ subcarrier, and $\lfloor N/2 \rfloor$ represents taking the floor of N/2.

Optionally, when N is the odd number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the odd number, a start location of the bandwidth occupied by the first frequency domain signal is a $1^{st}$ subcarrier of the bandwidth occupied by the second frequency domain signal, and an end location of the bandwidth occupied by the first frequency domain signal is the first subcarrier.

A signal to which the third frequency domain signal is mapped in the bandwidth occupied by the third frequency domain signal is the same as that to which the second frequency domain signal is mapped in the bandwidth occupied by the third frequency domain signal.

According to the foregoing technical solution, the signal (that is, the second frequency domain signal) of the second signal in frequency domain is the signal whose amplitude value is symmetrical about the first subcarrier, and the bandwidth occupied by the signal (that is, the third frequency domain signal) of the fourth signal in frequency domain, the first subcarrier, and the bandwidth occupied by the second frequency domain signal meet the foregoing relationship. In other words, the bandwidth occupied by the third frequency domain signal is reduced to half of that occupied by the second frequency domain signal, to improve spectral efficiency in a scenario in which the third frequency domain signal is used as a transmission signal.

Optionally, that "a start location of the bandwidth occupied by the third frequency domain signal is the first subcarrier, and an end location of the bandwidth occupied by the third frequency domain signal is a last subcarrier of the bandwidth occupied by the second frequency domain signal; or a start location of the bandwidth occupied by the third frequency domain signal is a 1st subcarrier of the bandwidth occupied by the second frequency domain signal, and an end location of the bandwidth occupied by the third frequency domain signal is the first subcarrier" may be expressed as that "the third frequency domain signal is a first half of the second frequency domain signal; or the third frequency domain signal is a second half of the second frequency domain signal"; may be expressed as that "the third frequency domain signal is the same as a first half of the second frequency domain signal; or the third frequency domain signal is the same as a second half of the second frequency domain signal"; or may be expressed as that "the third frequency domain signal is a frequency domain signal that includes the first subcarrier in the second frequency domain signal and that is mapped to a first half of the first subcarrier; or the third frequency domain signal is a frequency domain signal that includes the first subcarrier in the second frequency domain signal and that is mapped to a second half of the first subcarrier".

Optionally, the quantity of subcarriers of the bandwidth occupied by the second frequency domain signal is N, and numbers (or indexes) of the N subcarriers are contiguous. In other words, the bandwidth occupied by the second frequency domain signal includes N contiguously numbered (or indexed) subcarriers. Alternatively, the quantity of subcarriers of the bandwidth occupied by the second frequency domain signal is N, numbers (or indexes) of the N subcarriers are discontiguous, and the N discontiguously numbered subcarriers may be re-sorted to obtain N contiguously numbered subcarriers. Correspondingly, the first subcarrier is determined based on the N contiguously numbered (or indexed) subcarriers.

Optionally, the start location of the bandwidth may alternatively be expressed as a location of a 1st subcarrier of the bandwidth, a subcarrier start location of the bandwidth, or another expression. This is not limited herein. Similarly, the end location of the bandwidth may alternatively be expressed as a location of a last subcarrier of the bandwidth, a subcarrier end location of the bandwidth, a subcarrier termination location of the bandwidth, a termination location of the bandwidth, or another expression. This is not limited herein.

In a possible implementation of the third aspect or the fourth aspect, the first frequency domain signal meets at least one of the following: The bandwidth occupied by the first frequency domain signal is the same as that occupied by the third frequency domain signal; or a frequency domain location of the first frequency domain signal is the same as that of the third frequency domain signal.

According to the foregoing technical solution, the bandwidth occupied by the signal (that is, the first frequency domain signal) of the first signal in frequency domain is the same as that occupied by the signal (that is, the third frequency domain signal) of the fourth signal in frequency domain, or a frequency domain location of the signal (that is, the first frequency domain signal) of the first signal in frequency domain is the same as that of the signal (that is, the third frequency domain signal) of the fourth signal in frequency domain. In other words, the signal of the first signal in frequency domain may be a signal obtained by performing amplitude-phase transform on the signal of the fourth signal in frequency domain. In this way, the signal receiving device may receive, on the bandwidth (or the frequency domain location) corresponding to the fourth signal, the first signal obtained by performing amplitude-phase transform on the fourth signal, that is, the signal receiving device may receive the first signal without sensing the amplitude-phase transform of the fourth signal, to reduce processing complexity of the signal receiving device.

In a possible implementation of the third aspect or the fourth aspect, that a phase of the first signal is associated with a third signal includes: A value of the phase of the first signal is equal to that of the third signal, or a value of the phase of the first signal is directly proportional to that of the third signal.

According to the foregoing technical solution, the value of the phase of the first signal sent by the signal sending device is equal to that of the third signal, or the value of the phase of the first signal sent by the signal sending device is directly proportional to that of the third signal. Therefore, when the first signal and the second signal carry the same amplitude shift keying modulation symbol, the signal sending device determines, as the phase of the first signal, a value (or a value that is in direct proportion to the value) of the signal (that is, the third signal) obtained through the Hilbert transform of the second signal, to reduce or eliminate the impact of the signal obtained through the Hilbert transform on the envelope detection demodulation performance.

In a possible implementation of the third aspect or the fourth aspect, the phase of the first signal is equal to the third signal, the ratio of the high level to the low level in the first signal is equal to $e^{z1}/e^{z2}$, and z1 and z2 are equal to values of the high level and the low level in the second signal. For example, the first signal satisfies:

$$a(t) = e^{s(t)+j\hat{s}(t)}.$$

a(t) represents the first signal, e is the natural constant, s(t) represents the second signal, and ŝ(t) represents the third signal.

Optionally, s(t) + jŝ(t) represents the fourth signal.

It should be noted that a(t) = e^s(t)+jŝ(t) may alternatively be represented as:

$$a(t) = 1 + m(t) + m(t)^2/2 + O(m(t)^2) \text{ or } a(t) = 1 + m(t).$$

m(t) satisfies:

$$m(t) = s(t) + j\hat{s}(t).$$

a(t) represents the first signal, e is the natural constant, s(t) represents the second signal, ŝ(t) represents the third signal, and s(t) + jŝ(t) represents the fourth signal (that is, m(t) represents the fourth signal).

It should be understood that, in actual application of the solution, the signal sending device may generate the first signal according to any one of the foregoing plurality of implementations of the first signal, and a specific signal deviation may be generated in the process of generating the first signal. The signal deviation may be generated due to the error of the internal device of the signal sending device, the quantization error generated in the process in which the signal sending device obtains the first signal through the mapping of the QAM or PSK modulation symbol, the mathematical operation approximation error (for example, the error generated in the series expansion operation) generated in the process in which the signal sending device generates the first signal, and the another error that may exist. This is not limited herein.

According to the foregoing technical solution, although the signal sending device sacrifices a specific ratio of a high level to a low level in the amplitude shift keying modulation signal, that is, a modulation depth of the amplitude shift keying modulation, the spectral efficiency of sending the amplitude shift keying modulation signal is effectively improved in the solution. In addition, in a manner of transferring the value of the signal obtained through the Hilbert transform of the second signal to a phase domain of the first signal, the impact of the signal obtained through the Hilbert transform on the envelope detection demodulation performance of the first signal is effectively eliminated.

In a possible implementation of the third aspect, the method further includes: sending first indication information, where the first indication information indicates that a signal modulation scheme is a single sideband modulation scheme.

According to the foregoing technical solution, an implementation of introducing a signal obtained through Hilbert transform of a to-be-sent signal is used to reduce a spectrum resource occupied by the to-be-sent signal. Before the elimination, the to-be-sent signal may be referred to as a double sideband modulation signal, and after the elimination, the to-be-sent signal may be referred to as a single sideband modulation signal. Because the first signal sent by the signal sending device is a signal after the elimination, the signal sending device may further send the first indication information indicating that the signal modulation scheme is the single sideband modulation scheme, so that the signal receiving device receives and parses the first signal.

In a possible implementation of the fourth aspect, the method further includes: receiving first indication information, where the first indication information indicates that a signal modulation scheme is a single sideband modulation scheme. That the signal receiving device determines bit information corresponding to the first signal includes: The signal receiving device determines, based on the first indication information, the bit information corresponding to the first signal.

According to the foregoing technical solution, in a process in which an implementation of introducing a signal obtained through Hilbert transform of a to-be-sent signal is used to eliminate a wasted part in a spectrum resource of the to-be-sent signal, before the elimination, the to-be-sent signal may be referred to as a double sideband modulation signal, and after the elimination, the to-be-sent signal may be referred to as a single sideband modulation signal. Because the first signal received by the signal receiving device is a signal after the elimination, the signal receiving device may further receive the first indication information indicating that the signal modulation scheme is the single sideband modulation scheme, so that the signal receiving device receives and parses the first signal based on the first indication information, to determine the bit information corresponding to the first signal.

Optionally, the first indication information is carried in a preamble sequence, downlink control information (downlink control information, DCI), common signaling (for example, paging information or group paging information), common media access control (media access control, MAC) signaling, or radio resource control (radio resource control, RRC) signaling, or the first indication information is carried in another message or other signaling. This is not limited herein.

A fifth aspect of embodiments of this application provides a communication apparatus. The apparatus may implement the method in any one of the first aspect or the possible implementations of the first aspect. The apparatus includes a corresponding unit or module configured to perform the foregoing method. The unit or the module included in the apparatus may be implemented by using software and/or hardware. For example, the apparatus may be a signal sending device, the apparatus may be a component (for example, a processor, a chip, or a chip system) in the signal sending device, or the apparatus may be a logic module or software that can implement all or some functions of the signal sending device.

The communication apparatus includes a transceiver unit and a processing unit.

The processing unit is configured to generate a first signal, where the first signal carries M amplitude shift keying modulation symbols, the first signal is one orthogonal frequency division multiplexing OFDM symbol in time domain, the first signal is a first frequency domain signal in frequency domain, bandwidth occupied by the first frequency domain signal is half of that occupied by a second frequency domain signal, the second frequency domain signal is a second signal in time domain, the second signal carries the M amplitude shift keying modulation symbols, duration of the M amplitude shift keying modulation symbols carried by the first signal is the same as that of the M amplitude shift keying modulation symbols carried by the second signal, and M is a positive integer.

The transceiver unit is configured to send the first signal.

In a possible implementation of the fifth aspect, that duration of the M amplitude shift keying modulation symbols carried by the first signal is the same as that of the M amplitude shift keying modulation symbols carried by the second signal includes at least one of the following:

duration of each of the M amplitude shift keying modulation symbols carried by the first signal is the same as that of each of the M amplitude shift keying modulation symbols carried by the second signal; or
duration of an $i^{th}$ amplitude shift keying modulation symbol in the M amplitude shift keying modulation symbols carried by the first signal is the same as that of an $i^{th}$ amplitude shift keying modulation symbol in the M amplitude shift keying modulation symbols carried by the second signal, where i is a positive integer, and i is less than or equal to M.

In a possible implementation of the fifth aspect, the second frequency domain signal is a signal whose amplitude value is symmetrical about a first subcarrier, and a quantity of subcarriers of the bandwidth occupied by the second frequency domain signal is N.

When N is an even number, the first subcarrier is an $(N/2)^{th}$ subcarrier or an $((N/2) + 1)^{th}$ subcarrier.

Optionally, when N is the even number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the even number, a start location of the bandwidth occupied by the first frequency domain signal is a $2^{nd}$ subcarrier of the bandwidth occupied by the second frequency domain signal, and an end location of the bandwidth occupied by the first frequency domain signal is the first subcarrier.

When N is an odd number, the first subcarrier is an $\left(\lfloor N/2 \rfloor + 1\right)^{th}$ subcarrier, and $\lfloor N/2 \rfloor$ represents taking the floor of N/2.

Optionally, when N is the odd number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the odd number, a start location of the bandwidth occupied by the first frequency domain signal is a $1^{st}$ subcarrier of the bandwidth occupied by the second frequency domain signal, and an end location of the bandwidth occupied by the first frequency domain signal is the first subcarrier.

Optionally, signals to which the first frequency domain signal and the second frequency domain signal are mapped in the bandwidth occupied by the first frequency domain signal are the same.

In a possible implementation of the fifth aspect, the first signal meets at least one of the following:

a difference between a ratio of an amplitude value of a high level to an amplitude value of a low level in the first signal and a natural constant e is less than or equal to a first value;
an amplitude value of a high-level signal in the first signal is associated with an amplitude value of a high-level signal in the second signal, and an amplitude value of a low-level signal in the first signal is associated with an amplitude value of a low-level signal in the second signal;
an amplitude value of a high-level signal in the first signal is higher than an amplitude value of a high-level signal in the second signal; or
an amplitude value of a low-level signal in the first signal is higher than an amplitude value of a low-level signal in the second signal.

In a possible implementation of the fifth aspect, a signal obtained through Hilbert transform of the second signal is a third signal, and a phase of the first signal is associated with the third signal.

In a possible implementation of the fifth aspect, that a phase of the first signal is associated with the third signal includes:
a value of the phase of the first signal is equal to that of the third signal, or a value of the phase of the first signal is directly proportional to that of the third signal.

In a possible implementation of the fifth aspect, the phase of the first signal is equal to the third signal, the ratio of the high level to the low level in the first signal is equal to $e^{z1}/e^{z2}$, and z1 and z2 are equal to values of the high level and the low level in the second signal. For example, the first signal satisfies:

$$a(t) = e^{s(t)+j\hat{s}(t)}.$$

a(t) represents the first signal, e is the natural constant, s(t) represents the second signal, and ŝ(t) represents the third signal.

In a possible implementation of the fifth aspect,
the transceiver unit is further configured to send first indication information, where the first indication information indicates that a signal modulation scheme is a single sideband modulation scheme.

In the fifth aspect of this application, a composition module of the communication apparatus may be further configured to: perform the steps performed in the possible implementations of the first aspect, and achieve corresponding technical effects. For details, refer to the first aspect. Details are not described herein again.

A sixth aspect of this application provides a communication apparatus. The apparatus may implement the method in any one of the second aspect or the possible implementations of the second aspect. The apparatus includes a corresponding unit or module configured to perform the foregoing method. The unit or the module included in the apparatus may be implemented by using software and/or hardware. For example, the apparatus may be a signal receiving device, the apparatus may be a component (for example, a processor, a chip, or a chip system) in the signal receiving device, or the apparatus may be a logic module or software that can implement all or some functions of the signal receiving device.

The communication apparatus includes a transceiver unit and a processing unit.

The transceiver unit is configured to receive a first signal, where the first signal carries M amplitude shift keying modulation symbols, the first signal is one orthogonal frequency division multiplexing OFDM symbol in time domain, the first signal is a first frequency domain signal in frequency domain, bandwidth occupied by the first frequency domain signal is half of that occupied by a second frequency domain signal, the second frequency domain signal is a second signal in time domain, the second signal carries the M amplitude shift keying modulation symbols, duration of the M amplitude shift keying modulation symbols carried by the first signal is the same as that of the M amplitude shift keying modulation symbols carried by the second signal, and M is a positive integer.

The processing unit is configured to determine, based on the first signal, bit information corresponding to the M amplitude shift keying modulation symbols.

In a possible implementation of the sixth aspect, that duration of the M amplitude shift keying modulation symbols carried by the first signal is the same as that of the M amplitude shift keying modulation symbols carried by the second signal includes at least one of the following:

duration of each of the M amplitude shift keying modulation symbols carried by the first signal is the same as that of each of the M amplitude shift keying modulation symbols carried by the second signal; or
duration of an ith amplitude shift keying modulation symbol in the M amplitude shift keying modulation symbols carried by the first signal is the same as that of an ith amplitude shift keying modulation symbol in the M amplitude shift keying modulation symbols carried by the second signal, where i is a positive integer, and i is less than or equal to M.

In a possible implementation of the sixth aspect, the second frequency domain signal is a signal whose amplitude value is symmetrical about a first subcarrier, and a quantity of subcarriers of the bandwidth occupied by the second frequency domain signal is N.

When N is an even number, the first subcarrier is an $(N/2)^{th}$ subcarrier or an $((N/2) + 1)^{th}$ subcarrier.

Optionally, when N is the even number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the even number, a start location of the bandwidth occupied by the first frequency domain signal is a 2nd subcarrier of the bandwidth occupied by the second frequency domain signal, and an end location of the bandwidth occupied by the first frequency domain signal is the first subcarrier.

When N is an odd number, the first subcarrier is an $(\lfloor N/2 \rfloor + 1)^{th}$ subcarrier, and $\lfloor N/2 \rfloor$ represents taking the floor of N/2.

Optionally, when N is the odd number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the odd number, a start location of the bandwidth occupied by the first frequency domain signal is a $1^{st}$ subcarrier of the bandwidth occupied by the second frequency domain signal, and an end location of the bandwidth occupied by the first frequency domain signal is the first subcarrier.

Optionally, signals to which the first frequency domain signal and the second frequency domain signal are mapped in the bandwidth occupied by the first frequency domain signal are the same.

In a possible implementation of the sixth aspect, the first signal meets at least one of the following:

a difference between a ratio of an amplitude value of a high level to an amplitude value of a low level in the first signal and a natural constant e is less than or equal to a first value;

an amplitude value of a high-level signal in the first signal is associated with an amplitude value of a high-level signal in the second signal, and an amplitude value of a low-level signal in the first signal is associated with an amplitude value of a low-level signal in the second signal;

an amplitude value of a high-level signal in the first signal is higher than an amplitude value of a high-level signal in the second signal; or

an amplitude value of a low-level signal in the first signal is higher than an amplitude value of a low-level signal in the second signal.

In a possible implementation of the sixth aspect, a signal obtained through Hilbert transform of the second signal is a third signal, and a phase of the first signal is associated with the third signal.

In a possible implementation of the sixth aspect, that a phase of the first signal is associated with the third signal includes:

a value of the phase of the first signal is equal to that of the third signal, or a value of the phase of the first signal is directly proportional to that of the third signal.

In a possible implementation of the sixth aspect, the phase of the first signal is equal to the third signal, the ratio of the high level to the low level in the first signal is equal to $e^{z1}/e^{z2}$, and z1 and z2 are equal to values of the high level and the low level in the second signal. For example, the first signal satisfies:

$$a(t) = e^{s(t)+j\hat{s}(t)}.$$

a(t) represents the first signal, e is the natural constant, s(t) represents the second signal, and $\hat{s}(t)$ represents the third signal.

In a possible implementation of the sixth aspect, the transceiver unit is further configured to receive first indication information, where the first indication information indicates that a signal modulation scheme is a single sideband modulation scheme.

In the sixth aspect of this application, a composition module of the communication apparatus may be further configured to: perform the steps performed in the possible implementations of the second aspect, and achieve corresponding technical effects. For details, refer to the second aspect. Details are not described herein again.

A seventh aspect of this application provides a communication apparatus. The apparatus may implement the method in any one of the third aspect or the possible implementations of the third aspect. The apparatus includes a corresponding unit or module configured to perform the foregoing method. The unit or the module included in the apparatus may be implemented by using software and/or hardware. For example, the apparatus may be a signal sending device, the apparatus may be a component (for example, a processor, a chip, or a chip system) in the signal sending device, or the apparatus may be a logic module or software that can implement all or some functions of the signal sending device.

The communication apparatus includes a transceiver unit and a processing unit.

The processing unit is configured to generate a first signal, where a phase of the first signal is associated with a third signal, the third signal is a signal obtained through Hilbert transform of a second signal, and both the first signal and the second signal are amplitude shift keying modulation signals.

The first signal meets at least one of the following:

a difference between a ratio of an amplitude value of a high level to an amplitude value of a low level in the first signal and a natural constant e is less than or equal to a first value; or

an amplitude value of a high-level signal in the first signal is associated with an amplitude value of a high-level signal in the second signal, and an amplitude value of a low-level signal in the first signal is associated with an amplitude value of a low-level signal in the second signal.

The transceiver unit is configured to send the first signal.

In a possible implementation of the seventh aspect, the first signal meets at least one of the following:

an amplitude value of a high-level signal in the first signal is higher than an amplitude value of a high-level signal in the second signal; or

an amplitude value of a low-level signal in the first signal is higher than an amplitude value of a low-level signal in the second signal.

In a possible implementation of the seventh aspect,
a signal of the first signal in frequency domain is a first frequency domain signal, and a signal of the second signal in frequency domain is a second frequency domain signal.

Bandwidth occupied by the second frequency domain signal is twice that occupied by the first frequency domain signal.

In a possible implementation of the seventh aspect,
the third signal is an imaginary part of a fourth signal, and the second signal is a real part of the fourth signal.

A signal of the fourth signal in frequency domain is a third frequency domain signal, where the bandwidth occupied by the second frequency domain signal is twice that occupied by the third frequency domain signal.

In a possible implementation of the seventh aspect,
the second frequency domain signal is a signal whose amplitude value is symmetrical about a first subcarrier, and a quantity of subcarriers of the bandwidth occupied by the second frequency domain signal is N.

When N is an even number, the first subcarrier is an $(N/2)^{th}$ subcarrier or an $((N/2) + 1)^{th}$ subcarrier.

Optionally, when N is the even number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the even number, a start location of the bandwidth occupied by the first frequency domain signal is a $2^{nd}$ subcarrier of the bandwidth occupied by the second frequency domain signal, and an end location of the bandwidth occupied by the first frequency domain signal is the first subcarrier.

When N is an odd number, the first subcarrier is an $(\lfloor N/2 \rfloor + 1)^{th}$ subcarrier, and $\lfloor N/2 \rfloor$ represents taking the floor of N/2.

Optionally, when N is the odd number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the odd number, a start location of the bandwidth occupied by the first frequency domain signal is a $1^{st}$ subcarrier of the bandwidth occupied by the second frequency domain signal, and an end location of the bandwidth occupied by the first frequency domain signal is the first subcarrier.

Optionally, a signal to which the third frequency domain signal is mapped in the bandwidth occupied by the third frequency domain signal is the same as that to which the second frequency domain signal is mapped in the bandwidth occupied by the third frequency domain signal.

In a possible implementation of the seventh aspect, the first frequency domain signal meets at least one of the following:

the bandwidth occupied by the first frequency domain signal is the same as that occupied by the third frequency domain signal; or

a frequency domain location of the first frequency domain signal is the same as that of the third frequency domain signal.

In a possible implementation of the seventh aspect, that a phase of the first signal is associated with a third signal includes:
a value of the phase of the first signal is equal to that of the third signal, or a value of the phase of the first signal is directly proportional to that of the third signal.

In a possible implementation of the seventh aspect, the phase of the first signal is equal to the third signal, the ratio of the high level to the low level in the first signal is equal to $e^{z1}/e^{z2}$, and z1 and z2 are equal to values of the high level and the low level in the second signal. For example, the first signal satisfies:

$$a(t) = e^{s(t)+j\hat{s}(t)}.$$

a(t) represents the first signal, e is the natural constant, s(t) represents the second signal, and $\hat{s}(t)$ represents the third signal.

Optionally, s(t) + j$\hat{s}$(t) represents the fourth signal.

It should be noted that a(t) = $e^{s(t)+j\hat{s}(t)}$ may alternatively be represented as:

$$a(t) = 1 + m(t) + m(t)^2/2 + O(m(t)^2) \text{ or } a(t) = 1 + m(t).$$

m(t) satisfies:

$$m(t) = s(t) + j\hat{s}(t).$$

a(t) represents the first signal, e is the natural constant, s(t) represents the second signal, ŝ(t) represents the third signal, and s(t) + jŝ(t) represents the fourth signal (that is, m(t) represents the fourth signal).

In a possible implementation of the seventh aspect,
the transceiver unit is further configured to send first indication information, where the first indication information indicates that a signal modulation scheme is a single sideband modulation scheme.

In the seventh aspect of this application, a composition module of the communication apparatus may be further configured to: perform the steps performed in the possible implementations of the third aspect, and achieve corresponding technical effects. For details, refer to the third aspect. Details are not described herein again.

An eighth aspect of this application provides a communication apparatus. The apparatus may implement the method in any one of the fourth aspect or the possible implementations of the fourth aspect. The apparatus includes a corresponding unit or module configured to perform the foregoing method. The unit or the module included in the apparatus may be implemented by using software and/or hardware. For example, the apparatus may be a signal receiving device, the apparatus may be a component (for example, a processor, a chip, or a chip system) in the signal receiving device, or the apparatus may be a logic module or software that can implement all or some functions of the signal receiving device.

The communication apparatus includes a transceiver unit and a processing unit.

The transceiver unit is configured to receive a first signal, where a phase of the first signal is associated with a third signal, the third signal is a signal obtained through Hilbert transform of a second signal, and both the first signal and the second signal are amplitude shift keying modulation signals.

The first signal meets at least one of the following:

a difference between a ratio of an amplitude value of a high level to an amplitude value of a low level in the first signal and a natural constant e is less than or equal to a first value; or
an amplitude value of a high-level signal in the first signal is associated with an amplitude value of a high-level signal in the second signal, and an amplitude value of a low-level signal in the first signal is associated with an amplitude value of a low-level signal in the second signal.

The processing unit is configured to determine bit information corresponding to the first signal.

In a possible implementation of the eighth aspect, the first signal meets at least one of the following:

an amplitude value of a high-level signal in the first signal is higher than an amplitude value of a high-level signal in the second signal; or
an amplitude value of a low-level signal in the first signal is higher than an amplitude value of a low-level signal in the second signal.

In a possible implementation of the eighth aspect,
a signal of the first signal in frequency domain is a first frequency domain signal, and a signal of the second signal in frequency domain is a second frequency domain signal.

Bandwidth occupied by the second frequency domain signal is twice that occupied by the first frequency domain signal.

In a possible implementation of the eighth aspect,
the third signal is an imaginary part of a fourth signal, and the second signal is a real part of the fourth signal.

A signal of the fourth signal in frequency domain is a third frequency domain signal, where the bandwidth occupied by the second frequency domain signal is twice that occupied by the third frequency domain signal.

In a possible implementation of the eighth aspect,
the second frequency domain signal is a signal whose amplitude value is symmetrical about a first subcarrier, and a quantity of subcarriers of the bandwidth occupied by the second frequency domain signal is N.

When N is an even number, the first subcarrier is an $(N/2)^{th}$ subcarrier or an $((N/2) + 1)^{th}$ subcarrier.

Optionally, when N is the even number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the even number, a start location of the bandwidth occupied by the first frequency domain signal is a $2^{nd}$ subcarrier of the bandwidth occupied by the second frequency domain signal, and an end location of the bandwidth occupied by the first frequency domain signal is the first subcarrier.

When N is an odd number, the first subcarrier is an $\left(\lfloor N/2 \rfloor + 1\right)^{th}$ subcarrier, and $\lfloor N/2 \rfloor$ represents taking the floor of N/2.

Optionally, when N is the odd number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the odd number, a start location of the bandwidth occupied by the first frequency domain signal is a $1^{st}$ subcarrier of the bandwidth occupied by the second frequency domain signal, and an end location of the bandwidth occupied by the first frequency domain signal is the first subcarrier.

Optionally, a signal to which the third frequency domain signal is mapped in the bandwidth occupied by the third frequency domain signal is the same as that to which the second frequency domain signal is mapped in the bandwidth occupied by the third frequency domain signal.

In a possible implementation of the eighth aspect, the first frequency domain signal meets at least one of the following:

the bandwidth occupied by the first frequency domain signal is the same as that occupied by the third frequency domain signal; or
a frequency domain location of the first frequency domain signal is the same as that of the third frequency domain signal.

In a possible implementation of the eighth aspect, that a phase of the first signal is associated with a third signal includes:
a value of the phase of the first signal is equal to that of the third signal, or a value of the phase of the first signal is directly proportional to that of the third signal.

In a possible implementation of the eighth aspect, the phase of the first signal is equal to the third signal, the ratio of the high level to the low level in the first signal is equal to $e^{z1}/e^{z2}$, and z1 and z2 are equal to values of the high level and the low level in the second signal. For example, the first signal satisfies:

$$a(t) = e^{s(t) + j\hat{s}(t)}.$$

a(t) represents the first signal, e is the natural constant, s(t) represents the second signal, and ŝ(t) represents the third signal.

Optionally, s(t) + jŝ(t) represents the fourth signal.

It should be noted that a(t) = $e^{s(t)+j\hat{s}(t)}$ may alternatively be represented as:

$$a(t) = 1 + m(t) + m(t)^2/2 + O(m(t)^2) \text{ or } a(t) = 1 + m(t).$$

m(t) satisfies:

$$m(t) = s(t) + j\hat{s}(t).$$

a(t) represents the first signal, e is the natural constant, s(t) represents the second signal, ŝ(t) represents the third signal, and s(t) + jŝ(t) represents the fourth signal (that is, m(t) represents the fourth signal).

In a possible implementation of the eighth aspect,
the transceiver unit is further configured to receive first indication information, where the first indication information indicates that a signal modulation scheme is a single sideband modulation scheme.

That the processing unit is configured to determine bit information corresponding to the first signal includes:
the processing unit is configured to determine, based on the first indication information, the bit information corresponding to the first signal.

In the eighth aspect of this application, a composition module of the communication apparatus may be further configured to: perform the steps performed in the possible implementations of the fourth aspect, and achieve corresponding technical effects. For details, refer to the fourth aspect. Details are not described herein again.

A ninth aspect of this application provides a communication apparatus. The communication apparatus includes a processor. The processor is coupled to a memory. The memory is configured to store a computer program or instructions.

The processor is configured to execute the computer program or the instructions in the memory, to enable the method in any one of the first aspect or the possible implementations of the first aspect to be performed, or enable the method in any one of the third aspect or the possible implementations of the third aspect to be performed.

A tenth aspect of this application provides a communication apparatus. The communication apparatus includes a processor. The processor is coupled to a memory. The memory is configured to store a computer program or instructions. The processor is configured to execute the computer program or the instructions in the memory, to enable the method in any one of the second aspect or the possible implementations of the second aspect to be performed, or enable the method in any one of the fourth aspect or the possible implementations of the fourth aspect to be performed.

An eleventh aspect of this application provides a communication apparatus. The communication apparatus includes a processor and a communication interface. The communication interface is coupled to the processor. The processor is configured to run a computer program or instructions, to enable the method in any one of the first aspect or the possible implementations of the first aspect to be performed, or enable the method in any one of the third aspect or the possible implementations of the third aspect to be performed.

In a possible implementation of the eleventh aspect, the processor is configured to generate a first signal, and the processor sends the generated first signal through the communication interface.

Optionally, when the communication apparatus is a communication device (for example, a network device or a terminal device), the communication interface sends the first signal through an air interface.

Optionally, when the communication apparatus is a chip in the communication device (for example, the network device or the terminal device), the communication interface sends the first signal to a radio frequency module in the communication device, so that the radio frequency module in the communication device sends the first signal through the air interface.

A twelfth aspect of this application provides a communication apparatus. The communication apparatus includes a processor and a communication interface. The communication interface is coupled to the processor. The processor is configured to run a computer program or instructions, to enable the method in any one of the second aspect or the possible implementations of the second aspect to be performed, or enable the method in any one of the fourth aspect or the possible implementations of the fourth aspect to be performed.

In a possible implementation of the eleventh aspect, the communication interface is configured to receive a first signal, and the communication interface sends the first signal to the processor, so that the processor determines bit information corresponding to the first signal.

Optionally, when the communication apparatus is a communication device (for example, a network device or a terminal device), the communication interface receives the first signal through an air interface.

Optionally, when the communication apparatus is a chip in the communication device (for example, the network device or the terminal device), after a radio frequency module in the communication device receives the first signal, the radio frequency module sends the first signal to the communication interface, so that the radio frequency module in the communication device receives the first signal.

A thirteenth aspect of this application provides a computer-readable storage medium storing one or more computer-executable instructions. When the computer-executable instructions are executed by a processor, the processor performs the method in any one of the first aspect or the possible implementations of the first aspect or any one of the third aspect or the possible implementations of the third aspect.

A fourteenth aspect of this application provides a computer-readable storage medium storing one or more computer-executable instructions. When the computer-executable instructions are executed by a processor, the processor performs the method in any one of the second aspect or the possible implementations of the second aspect, or the processor performs the method in any one of the fourth aspect or the possible implementations of the fourth aspect.

A fifteenth aspect of this application provides a computer program product (or referred to as a computer program) storing one or more computer-executable instructions. When the computer program product is executed by a processor, the processor performs the method in any one of the first aspect or the possible implementations of the first aspect or any one of the third aspect or the possible implementations of the third aspect.

A sixteenth aspect of this application provides a computer program product storing one or more computer-executable instructions. When the computer program product is executed by a processor, the processor performs the method in any one of the second aspect or the possible implementations of the second aspect, or the processor performs the method in any one of the fourth aspect or the possible implementations of the fourth aspect.

A seventeenth aspect of this application provides a chip system. The chip system includes a processor, configured to support a network device in implementing a function in any one of the first aspect or the possible implementations of the first aspect or any one of the third aspect or the possible implementations of the third aspect. In a possible design, the chip system may further include a memory. The memory is configured to store program instructions and data that are necessary for the network device. The chip system may include a chip, or may include a chip and another discrete device.

An eighteenth aspect of this application provides a chip system. The chip system includes a processor, configured to support a terminal device in implementing a function in any one of the second aspect or the possible implementations of the second aspect or any one of the fourth aspect or the possible implementations of the fourth aspect. In a possible design, the chip system may further include a memory. The memory is configured to store program instructions and data that are necessary for the terminal device. The chip system may include a chip, or may include a chip and another discrete device.

A nineteenth aspect of this application provides a communication system. The communication system includes the communication apparatus in the fifth aspect and the communication apparatus in the sixth aspect, the communication system includes the communication apparatus in the seventh aspect and the communication apparatus in the eighth aspect, the communication system includes the communication apparatus in the ninth aspect and the communication apparatus in the tenth aspect, or the communication system includes the communication apparatus in the eleventh aspect and the communication apparatus in the twelfth aspect.

For technical effects brought by any one of the fifth aspect, the seventh aspect, the ninth aspect, the eleventh aspect, the thirteenth aspect, the fifteenth aspect, the seventeenth aspect, and the nineteenth aspect or the possible implementations thereof, refer to the technical effects brought by the first aspect or the different possible implementations of the first aspect, or refer to the technical effects brought by the third aspect or the different possible implementations of the third aspect. Details are not described herein again.

For technical effects brought by any one of the sixth aspect, the eighth aspect, the tenth aspect, the twelfth aspect, the fourteenth aspect, the sixteenth aspect, the eighteenth aspect, and the nineteenth aspect or the possible implementations thereof, refer to the technical effects brought by the second aspect or the different possible implementations of the second aspect, or refer to the technical effects brought by the fourth aspect or the different possible implementations of the fourth aspect. Details are not described herein again.

## BRIEF DESCRIPTION OF DRAWINGS

FIG. 1 is a diagram of a communication system according to this application;
FIG. 2a is another diagram of a communication system according to this application;
FIG. 2b is another diagram of a communication system according to this application;
FIG. 2c is another diagram of a communication system according to this application;
FIG. 3 is a diagram of a signal processing manner according to this application;
FIG. 4 is a diagram of a communication method according to this application;
FIG. 5a is a diagram of a bandwidth implementation according to this application;
FIG. 5b is another diagram of a bandwidth implementation according to this application;
FIG. 6a is another diagram of a communication method according to this application;
FIG. 6b is another diagram of a communication method according to this application;
FIG. 6c is another diagram of a communication method according to this application;
FIG. 6d is another diagram of a communication method according to this application;
FIG. 6e is another diagram of a communication method according to this application;
FIG. 6f is another diagram of a communication method according to this application;
FIG. 6g is another diagram of a communication method according to this application;
FIG. 6h is another diagram of a communication method according to this application;
FIG. 7 is another diagram of a communication method according to this application;
FIG. 8 is a diagram of a communication apparatus according to this application;
FIG. 9 is another diagram of a communication apparatus according to this application; and
FIG. 10 is another diagram of a communication apparatus according to this application.

## DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by persons of ordinary skill in the art based on embodiments of this application without creative efforts shall fall within the protection scope of this application.

Some terms in embodiments of this application are first described, to help persons skilled in the art have a better understanding.

1. A terminal device may be a wireless terminal device that can receive scheduling and indication information of a network device. The wireless terminal device may be a device that provides a user with voice and/or data connectivity, a handheld device with a wireless connection function, or another processing device connected to a wireless modem. The terminal device may communicate with one or more core networks or the internet via a radio access network (radio access network, RAN). The terminal device may be a mobile terminal device, for example, a mobile telephone (or referred to as a "cellular" phone or a mobile phone (mobile phone)), a computer, or a data card. For example, the terminal device may be a portable, a pocket-sized, a handheld, a computer built-in, or an in-vehicle mobile apparatus, which exchanges language and/or data with the radio access network. For example, the terminal device is a device like a personal communication service (personal communication service, PCS) phone, a cordless telephone, a session initiation protocol (SIP) phone, a wireless local loop (wireless local loop, WLL) station, a personal digital assistant (personal digital assistant, PDA), a tablet computer (Pad), or a computer with a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like. Alternatively, the terminal device may be a wearable device or a terminal device in a next-generation communication system, for example, a terminal device in a 5G communication system or a terminal device in a future evolved public land mobile network (public land mobile network, PLMN).

2. The network device may be a device in a wireless network. For example, the network device may be a radio access network (radio access network, RAN) node (or device) that connects the terminal device to the wireless network, and may also be referred to as a base station. Currently, some examples of the RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), and the like. In addition, in a network structure, the network device may include a central unit (central unit, CU) node, a distributed unit (distributed unit, DU) node, or a RAN device including a CU node and a DU node.

In addition, in another possible case, the network device may be another apparatus that provides a wireless communication function for the terminal device. A specific technology and a specific device form that are used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used to describe the technical solutions provided in embodiments of this application.

3. The terms "system" and "network" may be used interchangeably in embodiments of this application. "At least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, A and B, A and C, B and C, or A, B, and C. In addition, unless otherwise specified, ordinal numbers such as "first" and "second" in embodiments of this application are used to distinguish between a plurality of objects, but are not used to limit a sequence, a time sequence, priorities, or importance of the plurality of objects.

For ease of understanding a method provided in embodiments of this application, the following describes a system architecture of the method provided in embodiments of this application. It may be understood that the system architecture described in embodiments of this application is intended to describe the technical solutions in embodiments of this application more clearly, and does not constitute a limitation on the technical solutions provided in embodiments of this application.

It should be understood that this application may be applied to a long term evolution (long term evolution, LTE) system, a new radio (new radio, NR) system, or another communication system in a future communication network, for example, a 6G system.

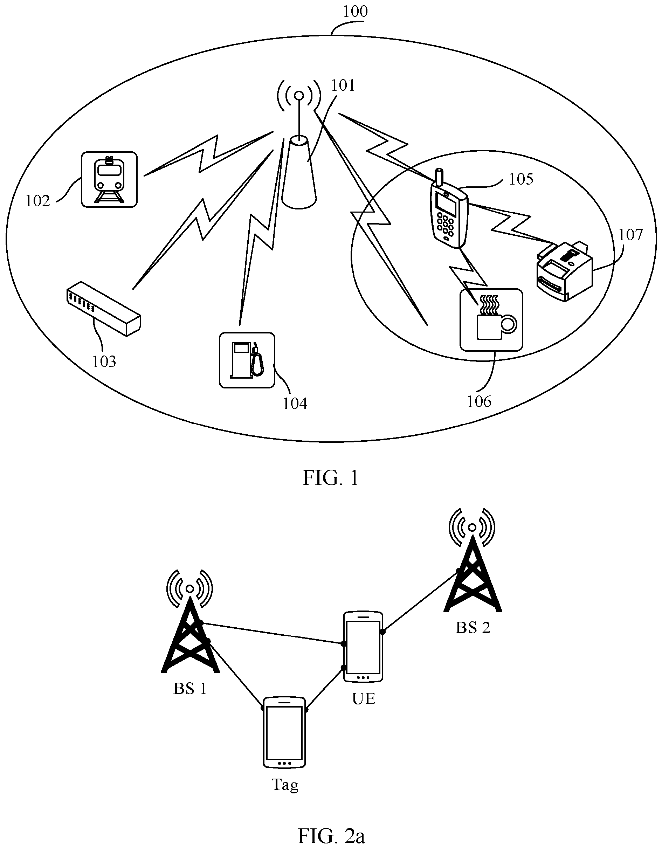

FIG. 1 is a diagram of a communication system according to this application. FIG. 1 shows an example of one network device 101 and six terminal devices. The six terminal devices are respectively a terminal device 102, a terminal device 103, a terminal device 104, a terminal device 105, a terminal device 106, and a terminal device 107. In the example shown in FIG. 1, an example in which the terminal device 102 is a vehicle, the terminal device 103 is a smart air conditioner, the terminal device 104 is a smart fuel dispenser, the terminal device 105 is a mobile phone, the terminal device 106 is a smart teacup, and the terminal device 107 is a printer is used for description.

It should be noted that FIG. 1 is an example scenario of the communication system provided in this application. In method embodiments provided in this application, a signal transmitting device may be the network device shown in FIG. 1, and a signal receiving device may be any terminal device shown in FIG. 1; or a signal transmitting device may be any terminal device shown in FIG. 1, and a signal receiving device may be another terminal device shown in FIG. 1.

In addition, the signal sending device and the signal receiving device in this application are not limited to the communication scenario shown in FIG. 1. The following further describes communication scenarios in this application with reference to more accompanying drawings.

In a possible implementation, this application may be applied to an LTE wireless communication system, an NR wireless communication system, and a future evolved NR wireless communication system. For example, this application may be applied to an OFDM system in LTE, an OFDM system in NR, a future OFDM system, and a system similar to OFDM. Service scenarios in this application may include service scenarios such as backscatter (BackScatter) communication, passive internet of things communication, and ambient internet of things (Ambient IoT) communication in an NR communication system (or a next-generation communication system of NR).

Specifically, the signal receiving device in the communication system may be a passive terminal device having an envelope detection receiver, a passive IoT terminal device, a semi-passive terminal device, or a semi-passive IoT terminal device. Alternatively, the signal receiving device in the communication system is a terminal device having a backscatter capability, an NR terminal device, an NR base station/micro base station/small cell, a reader terminal device, or the like.

In addition, the signal sending device may include an NR base station, a micro base station, a small cell, an NR terminal device, a reader, and the like.

Optionally, a link on which information sent by the signal sending device to the signal receiving device is located may be referred to as a downlink. Correspondingly, if the signal receiving device needs to feed back information after receiving a signal, a link on which the feedback information is located may be referred to as an uplink.

For example, an implementation scenario of the communication system is shown in FIG. 2a. Signal sending devices may be network devices, and signal receiving devices may be terminal devices. In FIG. 2a, the network devices include base stations (base stations, BSs), denoted as a BS 1 and a BS 2, and the terminal devices include UE and a tag (Tag) in the figure. The tag may be a passive tag or a semi-passive tag.

Optionally, in FIG. 2a, the BS 1 and the BS 2 separately communicate with the UE through a Uu interface, and the BS 1 and the UE separately communicate with the Tag through a passive internet of things (Passive IoT, PIoT) interface (which may be denoted as Uu-PIoT).

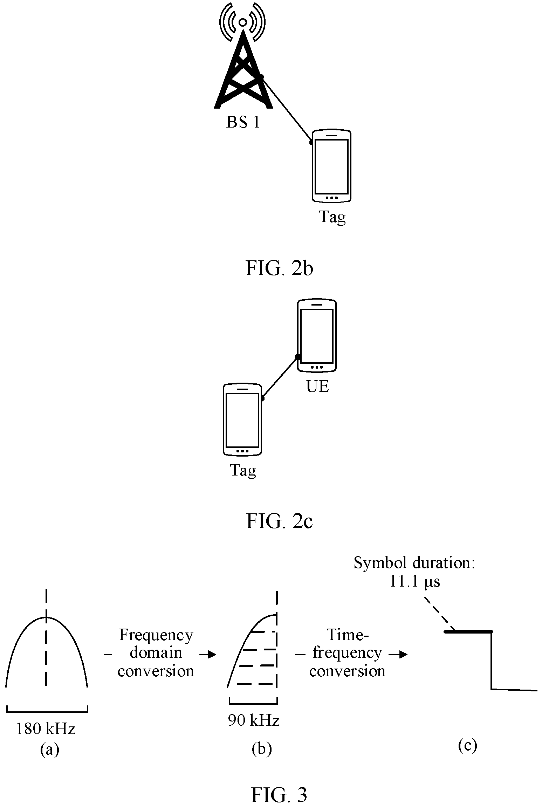

For example, an implementation scenario of the communication system is shown in FIG. 2b. A signal sending device may be a network device, and a signal receiving device may be a terminal device. In FIG. 2b, the network device includes a base station, denoted as a BS 1, and the terminal device includes a tag (Tag) in the figure. The tag may be a passive tag or a semi-passive tag.

For example, an implementation scenario of the communication system is shown in FIG. 2c. Both a signal sending device and a signal receiving device may be terminal devices. In FIG. 2c, the terminal device serving as the signal sending device includes UE in the figure, and the terminal device serving as the signal receiving device includes a tag (Tag) in the figure. The tag may be a passive tag or a semi-passive tag.

In addition, as communication machine-type communication (machine-type communication, MTC) and internet of things (internet of things, IoT) communication are more widely applied, a quantity of IoT device connections increases day by day. Therefore, the industry has a stronger demand for reducing costs and power consumption of an IoT device.

In an implementation example, in a 4G era, a narrow-band internet of things (Narrow-Band IoT, NB-IoT) system is introduced in 3GPP. However, a terminal device in the NB-IoT system further needs entire external (battery) energy supply, and has a capability of generating a local high-frequency local oscillator carrier. Therefore, this type of terminal can consume power only at a milliwatt level. For a purpose of connectivity of everything of 5G IoT, whether passive acceptance of an external radio frequency signal as local energy supply without external continuous energy supply is enabled, or whether a terminal device that is powered in a passive/semi-passive terminal manner and that cooperates with another energy harvesting manner is enabled to access a 5G network and perform effective communication in the 5G network is a key direction of a current 5G/5.5G+ research, and may also be defined as a research direction of the passive internet of things or backscatter communication.

The passive internet of things (Passive IoT)/backscatter (Backscatter) communication is an important research direction in the current 5G/5.5G internet of things field. In a passive internet of things system, there are terminals that can perform backscatter (Backscatter) communication, and the terminals may be conventionally defined as tags, and may be further classified into a passive tag and a semi-passive tag. Alternatively, a passive internet of things device may be defined as a terminal device that performs backscatter communication. A terminal device serving as the passive tag is used as an example. The passive tag or the terminal device that performs passive backscatter communication has no energy supply device/circuit. The terminal device only depends on receiving a radio frequency signal sent by the network device in a downlink direction, and obtaining a direct current voltage through a series of circuits such as a filter circuit, to obtain energy supply, so as to enable further demodulation of a subsequent downlink signal, and reflection of a subsequent uplink (modulation) signal. The network device that provides the downlink signal may be a base station device (including a series of base station devices such as a macro base station/small cell/micro base station), or may be a reader (Reader) device, a helper (Helper), or a series of network devices that can excite the passive/semi-passive terminal device.

Due to limitations of power consumption and complexity of the passive internet of things terminal device/terminal device that performs backscatter communication, the power consumption of this type of terminal may be limited to target power consumption that is 100 microwatts ($\mu$W) or less than 100 $\mu$W. Under a limitation of the target power consumption, this type of terminal device may not have a capability of generating a local high-frequency local oscillator, that is, the terminal does not have a capability of generating a local carrier corresponding to a transmit radio frequency. In this case, this type of terminal can demodulate a signal only in a non-coherent demodulation scheme. A common non-coherent demodulation method in a communication principle is an envelope detection (Envelope Detection) manner. The envelope detection manner specifically means that a receive end processes a received radio frequency signal via a rectifier diode to obtain a self-mixed signal, then filters out a high-frequency component in the self-mixed signal via a baseband low-pass filter, to obtain an effective baseband modulation signal envelope, directly performs energy decision based on the obtained baseband modulation signal envelope (or performs digital sampling on the obtained baseband modulation signal envelope), and then performs decision in a comparator to obtain an information bit before modulation.

Currently, an ASK modulation scheme is an effective modulation scheme in which envelope detection demodulation is enabled without the local high-frequency local oscillator. If a possible status of a digital modulation signal is in one-to-one correspondence with a status of a binary information symbol or a corresponding baseband signal of the binary information symbol, a modulated signal of the binary information symbol is referred to as a binary digital modulation signal. Keying by using the binary information symbol is referred to as binary amplitude shift keying, and is represented by 2ASK. In addition, on-off keying (on-off keying, OOK) is a special case of ASK modulation. For example, an example in which an information bit 0 and an information bit 1 respectively correspond to level values A1 and A2 of two modulation symbols is used. In 2ASK modulation, A1 is a level value less than or equal to 0.5, and A2 is a level value greater than or equal to 1. In OOK modulation, A1 corresponds to a low-level value, where the low-level value is 0 or a value close to 0; and A2 corresponds to a high-level value, where the high-level value is 1 or a value greater than 1. When receiving a 2ASK or OOK modulation signal, the receive end determines, based on a level value of the received signal and a demodulation threshold of the receive end, a modulation symbol and an information bit corresponding to the modulation symbol.

The OOK modulation has a common problem. Because there is only one channel of signal, an amplitude value of a frequency domain signal of the OOK modulation signal is symmetrical, that is, the frequency domain signal is axisymmetrical about a center frequency amplitude value of a sent signal.

An OOK modulation symbol rate R is used as an example, and main lobe bandwidth of the signal in frequency domain is 2R. Therefore, conventional OOK modulation may be referred to as a double sideband modulation signal, that is, symmetrical about a central axis, and effective spectral efficiency is only 50% (effective signal bandwidth/actual signal bandwidth=R/2R=50%). In other words, half of spectrum resources of the double sideband modulation signal are wasted.

In an implementation example, as shown in (a) in FIG. 3, signal bandwidth for transmission of the OOK symbol is 180 kHz. As shown in (b) in FIG. 3, because the spectral efficiency is 50%, actually effective signal bandwidth is only 90 kHz, and a peak symbol rate of the ASK is only 1/90 kHz≈11.1 $\mu$s, that is, symbol duration (symbol duration) in (c) in FIG. 3 is 11.1 $\mu$s. In this case, an example in which a transmission symbol has duration of one orthogonal frequency division multiplexing (Orthogonal frequency division multiplexing, OFDM) symbol, and a subcarrier spacing is 15 kHz is used. Symbol duration before addition of a cyclic prefix (cyclic prefix, CP) is 1/15 kHz≈66.7 $\mu$s, and a maximum of only six ASK symbols can be carried. Therefore, a frequency domain feature of the double sideband signal obtained through the OOK modulation greatly limits transmission efficiency of the double sideband signal. In an extremely low-power internet of things communication scenario, overall transmission efficiency of downlink information is also limited, and then communication efficiency is affected.

To resolve the foregoing problem, this application provides a communication method and a communication apparatus, to improve the communication efficiency. The following describes, with reference to the accompanying drawings, a plurality of embodiments provided in this application.

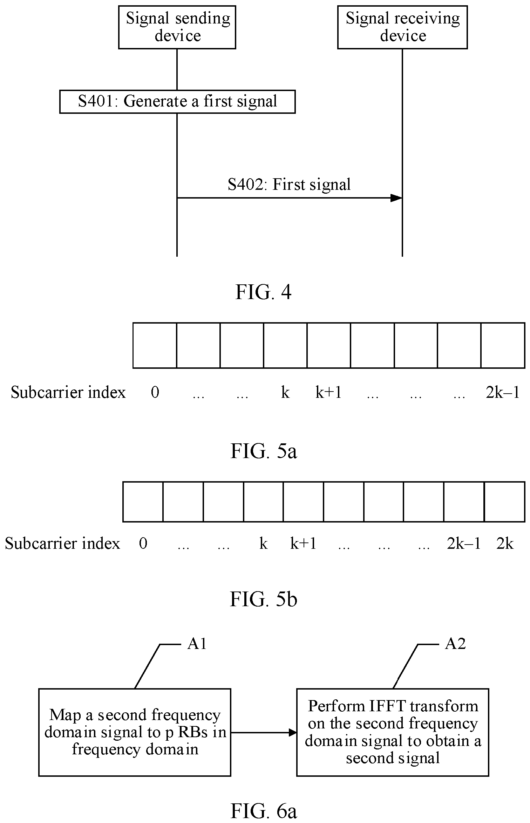

FIG. 4 is a diagram of a communication method according to this application. The method includes the following steps.

S401: A signal sending device generates a first signal.

In this embodiment, the signal sending device generates the first signal in step S401. The first signal carries M amplitude shift keying modulation symbols, the first signal is one OFDM symbol in time domain, the first signal is a first frequency domain signal in frequency domain, bandwidth occupied by the first frequency domain signal is half of that occupied by a second frequency domain signal, the second frequency domain signal is a second signal in time domain, the second signal carries the M amplitude shift keying modulation symbols, duration of the M amplitude shift keying modulation symbols carried by the first signal is the same as that of the M amplitude shift keying modulation symbols carried by the second signal, and M is a positive integer.

In this application, amplitude shift keying modulation may represent 2ASK modulation or OOK modulation. For the 2ASK modulation, an information bit 0 and an information bit 1 respectively correspond to level values A1 and A2 of two modulation symbols. For example, A1 is a level value less than or equal to 0.5, and A2 is a level value greater than or equal to 1. The OOK modulation is a type of special 2ASK modulation. A1 corresponds to a low-level value, where the low-level value is 0 or a value close to 0; and A2 corresponds to a high-level value, where the high-level value is 1 or a value greater than 1. When receiving a 2ASK or OOK modulation signal, a receive end determines, based on a level value of the received signal and a demodulation threshold of the receive end, a modulation symbol and an information bit corresponding to the modulation symbol.

S402: The signal sending device sends the first signal.

In this embodiment, after the signal sending device generates the first signal in step S401, the signal sending device sends the first signal in step S402. Correspondingly, a signal receiving device receives the first signal in step S402, and the signal receiving device determines, based on the first signal, the M amplitude shift keying modulation symbols carried by the first signal.

It should be understood that, because the modulation symbol is used to carry bit information, an implementation process in which the signal receiving device determines, based on the first signal, the M amplitude shift keying modulation symbols carried by the first signal may alternatively be expressed as that the signal receiving device determines, based on the first signal, bit information corresponding to the carried M amplitude shift keying modulation symbols.

It should be noted that the M amplitude shift keying modulation symbols carried by the first signal are the same as the M amplitude shift keying modulation symbols carried by the second signal. In other words, the bit information corresponding to the M amplitude shift keying modulation symbols carried by the first signal is the same as that corresponding to the M amplitude shift keying modulation symbols carried by the second signal. In other words, the bit information carried by the first signal is the same as that carried by the second signal.

In a possible implementation, in step S401, that duration of the M amplitude shift keying modulation symbols carried by the first signal generated by the signal sending device is the same as that of the M amplitude shift keying modulation symbols carried by the second signal includes at least one of the following: Duration of each of the M amplitude shift keying modulation symbols carried by the first signal is the same as that of each of the M amplitude shift keying modulation symbols carried by the second signal; or duration of an $i^{th}$ amplitude shift keying modulation symbol in the M amplitude shift keying modulation symbols carried by the first signal is the same as that of an $i^{th}$ amplitude shift keying modulation symbol in the M amplitude shift keying modulation symbols carried by the second signal, where i is a positive integer, and i is less than or equal to M. Specifically, a symbol rate of the amplitude shift keying modulation symbol included in the first signal is the same as that of the amplitude shift keying modulation symbol included in the second signal, and a difference between a signal waveform corresponding to the M amplitude shift keying modulation symbols carried by the first signal and a signal waveform corresponding to the M amplitude shift keying modulation symbols carried by the second signal is small.

For example, an example in which a subcarrier spacing in an OFDM system is 15 kHz, and a value of M is 12 is used. The signal sending device generates the first signal. In a specific implementation process in which duration of 12 amplitude shift keying modulation symbols carried on one OFDM symbol corresponding to the first signal is the same as that of 12 amplitude shift keying modulation symbols carried by the second signal, duration of each of the 12 amplitude shift keying modulation symbols carried by the first signal may be 66.7/12 microseconds, and duration of each of the 12 amplitude shift keying modulation symbols carried by the second signal may be 66.7/12 microseconds, where x may be equal to y; or duration of the 12 amplitude shift keying modulation symbols carried by the first signal may successively be x1, x2, x3, ..., and x12 (xi is a positive number, and i=1, ..., and 12) microseconds, and duration of the 12 amplitude shift keying modulation symbols carried by the first signal may successively be y1, y2, y3, ..., and y12 (yi is a positive number, and i=1, ..., and 12) microseconds, where x1 may be equal to y1, x2 may be equal to y2, x3 may be equal to y3, ..., and x12 may be equal to y12.

In a possible implementation, a time domain signal corresponding to the first frequency domain signal is the first signal, a time domain signal corresponding to the second frequency domain signal is the second signal, the second frequency domain signal is a signal whose amplitude value is symmetrical about a first subcarrier, and a quantity of subcarriers of the bandwidth occupied by the second frequency domain signal is N.

When N is an even number, the first subcarrier is an $(N/2)^{th}$ subcarrier or an $((N/2) + 1)^{th}$ subcarrier.

Optionally, when N is the even number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the even number, a start location of the bandwidth occupied by the first frequency domain signal is a 2nd subcarrier of the bandwidth occupied by the second frequency domain signal, and an end location of the bandwidth occupied by the first frequency domain signal is the first subcarrier.

When N is an odd number, the first subcarrier is an $(\lfloor N/2 \rfloor + 1)^{th}$ subcarrier, and $\lfloor N/2 \rfloor$ represents taking the floor of N/2.

Optionally, when N is the odd number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the odd number, a start location of the bandwidth occupied by the first frequency domain signal is a 1st subcarrier of the bandwidth occupied by the second frequency domain signal, and an end location of the bandwidth occupied by the first frequency domain signal is the first subcarrier.

Specifically, a signal (that is, the second frequency domain signal) of the second signal in frequency domain is the signal whose amplitude value is symmetrical about the first subcarrier. The symmetry of the amplitude value may mean that frequency domain signals on two sides of the first subcarrier are mutually conjugate-symmetric signals, or frequency domain signals on two sides of the first subcarrier may be signals with an equal modulus value (or an equal amplitude value). In addition, the bandwidth occupied by the first frequency domain signal, the first subcarrier, and the bandwidth occupied by the second frequency domain signal meet the foregoing relationship. In other words, the bandwidth occupied by the first frequency domain signal is reduced to half of that occupied by the second frequency domain signal, to improve spectral efficiency.

Optionally, signals to which the first frequency domain signal and the second frequency domain signal are mapped in the bandwidth occupied by the first frequency domain signal are the same.

For example, an example in which N is the even number, and N=24 is used. The quantity of subcarriers occupied by the bandwidth of the second frequency domain signal is 24, and the second frequency domain signal is {$s_1$, $s_2$, ..., $s_{11}$, $s_{12}$, $s_{11}^*$, ..., $s_2^*$, and $s_1^*$}, where s* and s are mutually amplitude-symmetric or conjugate-symmetric symbol values in the second frequency domain signal. The second frequency domain signal is mapped to a 2nd to a 24th subcarriers, where a value of a 1st subcarrier is 0, and then inverse fast Fourier transform (inverse fast fourier transform, IFFT) is performed on the second frequency domain signal to obtain the second signal. The bandwidth occupied by the first frequency domain signal is half of that occupied by the second frequency domain signal, and a quantity of occupied subcarriers is 12. The first frequency domain signal is {$s_1$, $s_2$, ..., $s_{11}$, and $s_{12}$} or {$s_{12}$, $s_{11}^*$, ..., $s_2^*$, and $s_1^*$}, and is mapped to the 2nd to a 13th subcarriers (or the 13th to the 24th subcarriers), and then IFFT is performed on the first frequency domain signal to obtain the first signal.

Specifically, the signals to which the first frequency domain signal and the second frequency domain signal are mapped in the bandwidth occupied by the first frequency domain signal are the same. In the manner, transmission of the M amplitude shift keying modulation symbols can be effectively performed while half of bandwidth of a sent signal can be saved. In the manner of directly taking half of the first frequency domain signal as the second frequency domain signal, under a criterion of ensuring subcarrier orthogonalization when an amplitude shift keying modulation signal is sent, not only transmission spectral efficiency of the amplitude shift keying modulation signal is improved, but also implementation and calculation complexity of sending the amplitude shift keying modulation signal by the signal sending device is not increased.

Optionally, that "a start location of the bandwidth occupied by the first frequency domain signal is the first subcarrier, and an end location of the bandwidth occupied by the first frequency domain signal is a last subcarrier of the bandwidth occupied by the second frequency domain signal; or a start location of the bandwidth occupied by the first frequency domain signal is a 1st subcarrier of the bandwidth occupied by the second frequency domain signal, and an end location of the bandwidth occupied by the first frequency domain signal is the first subcarrier" may be expressed as that "the first frequency domain signal is a first half of the second frequency domain signal; or the first frequency domain signal is a second half of the second frequency domain signal"; may be expressed as that "the first frequency domain signal is the same as a first half of the second frequency domain signal; or the first frequency domain signal is the same as a second half of the second frequency domain signal"; or may be expressed as that "the first frequency domain signal is a frequency domain signal that includes the first subcarrier in the second frequency domain signal and that is mapped to a first half of the first subcarrier; or the first frequency domain signal is a frequency domain signal that includes the first subcarrier in the second frequency domain signal and that is mapped to a second half of the first subcarrier".

Optionally, the quantity of subcarriers of the bandwidth occupied by the second frequency domain signal is N, and numbers (or indexes) of the N subcarriers are contiguous. In other words, the bandwidth occupied by the second frequency domain signal includes N contiguously numbered (or indexed) subcarriers. Alternatively, the quantity of subcarriers of the bandwidth occupied by the second frequency domain signal is N, numbers (or indexes) of the N subcarriers are discontiguous, and the N discontiguously numbered subcarriers may be re-sorted to obtain N contiguously numbered subcarriers. Correspondingly, the first subcarrier is determined based on the N contiguously numbered (or indexed) subcarriers.

Optionally, the start location of the bandwidth may alternatively be expressed as a location of a $1^{st}$ subcarrier of the bandwidth, a subcarrier start location of the bandwidth, or another expression. This is not limited herein. Similarly, the end location of the bandwidth may alternatively be expressed as a location of a last subcarrier of the bandwidth, a subcarrier end location of the bandwidth, a subcarrier termination location of the bandwidth, a termination location of the bandwidth, or another expression. This is not limited herein.

According to a technical solution shown in FIG. 4, the M amplitude shift keying modulation symbols included in the first signal sent by the signal sending device in step S402 are the same as the M amplitude shift keying modulation symbols included in the second signal. In addition, the bandwidth occupied by the first frequency domain signal of the first signal in frequency domain is half of that occupied by the second frequency domain signal of the second signal in frequency domain. In addition, the first signal is one OFDM symbol in time domain, and the duration of the M amplitude shift keying modulation symbols carried by the first signal is the same as that of the M amplitude shift keying modulation symbols carried by the second signal. In other words, the symbol rate of the amplitude shift keying modulation symbol included in the first signal is the same as that of the amplitude shift keying modulation symbol included in the second signal. In addition, the bandwidth occupied by the first frequency domain signal corresponding to the first signal sent by the signal sending device is reduced to half of that occupied by the second frequency domain signal of the second signal in frequency domain. Therefore, in the OFDM system, in the foregoing technical solution, under the criterion of ensuring the subcarrier orthogonalization when the amplitude shift keying modulation signal is sent, bandwidth of a signal that is obtained through the amplitude shift keying modulation and that is sent by the signal sending device is reduced by half, thereby effectively improving spectral efficiency of the signal, to improve communication efficiency.

For example, the following describes, by using implementation examples shown in FIG. 5a and FIG. 5b, an example of an implementation of the signal (that is, the first frequency domain signal) of the first signal in frequency domain sent by the signal sending device in step S402.

As shown in FIG. 5a, an example in which the quantity of subcarriers of the bandwidth occupied by the second frequency domain signal is N, and N is the even number is used, where a value of N is 2k (k is a positive integer), that is, the bandwidth occupied by the second frequency domain signal includes a $1^{st}$ subcarrier (that is, a subcarrier whose index is #0) to a $(2k)^{th}$ subcarrier (that is, a subcarrier whose index is #2k-1). In the example, if the N subcarriers are contiguous in frequency domain, the numbers (or the indexes) of the N subcarriers are also contiguous. As described above, the first subcarrier is a $k^{th}$ (that is, an $(N/2)^{th}$) subcarrier, or the first subcarrier is a $(k+1)^{th}$ (that is, an $((N/2)+1)^{th}$) subcarrier. In the following example, an example in which the first subcarrier is the $(k+1)^{th}$ (that is, $(N/2+1)^{th}$) subcarrier is used.

In a scenario shown in FIG. 5a, when the start location of the bandwidth occupied by the first frequency domain signal is the first subcarrier, and the end location of the bandwidth occupied by the first frequency domain signal is the last subcarrier of the bandwidth occupied by the second frequency domain signal, the bandwidth occupied by the first frequency domain signal includes the $(k+1)^{th}$ subcarrier to the $(2k)^{th}$ subcarrier (that is, a subcarrier whose index is #k to the subcarrier whose index is #2k-1).

In the scenario shown in FIG. 5a, when the start location of the bandwidth occupied by the first frequency domain signal is the $1^{st}$ subcarrier of the bandwidth occupied by the second frequency domain signal, and the end location of the bandwidth occupied by the first frequency domain signal is the first subcarrier, the bandwidth occupied by the first frequency domain signal includes a $2^{nd}$ subcarrier to the $(k+1)^{th}$ subcarrier (that is, a subcarrier whose index is #1 to a subcarrier whose index is #k).

Optionally, when the bandwidth occupied by the first frequency domain signal includes the $1^{st}$ subcarrier to the $(k+1)^{th}$ subcarrier, the first frequency domain signal does not perform signal mapping on the $1^{st}$ subcarrier (or a value of a mapped signal is set to a fixed value, for example, 0).

For example, an example in which the value of N is 24 (that is, a value of k is 12) is used herein, that is, the quantity of subcarriers of the bandwidth occupied by the second frequency domain signal is 24. In an implementation process in which the bandwidth occupied by the first frequency domain signal includes a $(k+1)^{th}$ subcarrier to a $(2k)^{th}$ subcarrier, the bandwidth occupied by the first frequency domain signal specifically includes a $13^{th}$ subcarrier to a $24^{th}$ subcarrier, that is, the bandwidth occupied by the first frequency domain signal includes 12 subcarriers. In an implementation process in which the bandwidth occupied by the first frequency domain signal includes a $2^{nd}$ subcarrier to the $(k+1)^{th}$ subcarrier, the bandwidth occupied by the first frequency domain signal specifically includes the $2^{nd}$ subcarrier to the $13^{th}$ subcarrier, that is, the bandwidth occupied by the first frequency domain signal includes 13 subcarriers.

Optionally, when the bandwidth occupied by the first frequency domain signal specifically includes the $2^{nd}$ subcarrier to the $13^{th}$ subcarrier, the first frequency domain signal does not perform signal mapping on the $1^{st}$ subcarrier (or a value of a mapped signal is set to a fixed value, for example, 0).

As shown in FIG. 5b, an example in which the quantity of subcarriers of the bandwidth occupied by the second frequency domain signal is N, and N is the odd number is used, where a value of N is 2k+1 (k is a positive integer), that is, the bandwidth occupied by the second frequency domain signal includes a 1st subcarrier (that is, a subcarrier whose index is #0) to a (2k+1)th subcarrier (that is, a subcarrier whose index is #2k). In the example, if the N subcarriers are contiguous in frequency domain, the numbers (or the indexes) of the N subcarriers are contiguous. As described above, the first subcarrier is a (k+1)th (that is, an $(\lfloor N/2 \rfloor + 1)^{th}$) subcarrier.

In a scenario shown in FIG. 5b, when the start location of the bandwidth occupied by the first frequency domain signal is the first subcarrier, and the end location of the bandwidth occupied by the first frequency domain signal is the last subcarrier of the bandwidth occupied by the second frequency domain signal, the bandwidth occupied by the first frequency domain signal includes the (k+1)th subcarrier to the (2k+1)th subcarrier (that is, a subcarrier whose index is #k to the subcarrier whose index is #2k).

In the scenario shown in FIG. 5b, when the start location of the bandwidth occupied by the first frequency domain signal is the 1st subcarrier of the bandwidth occupied by the second frequency domain signal, and the end location of the bandwidth occupied by the first frequency domain signal is the first subcarrier, the bandwidth occupied by the first frequency domain signal includes the 1st subcarrier to the (k+1)th subcarrier (that is, the subcarrier whose index is #0 to a subcarrier whose index is #k).

For example, an example in which the value of N is 23 (that is, a value of k is 11) is used herein, that is, the quantity of subcarriers of the bandwidth occupied by the second frequency domain signal is 23. In an implementation process in which the bandwidth occupied by the first frequency domain signal includes a (k+1)th subcarrier to a (2k)th subcarrier, the bandwidth occupied by the first frequency domain signal specifically includes a 12th subcarrier to a 23th subcarrier, that is, the bandwidth occupied by the first frequency domain signal includes 12 subcarriers. In an implementation process in which the bandwidth occupied by the first frequency domain signal includes a 1st subcarrier to the (k+1)th subcarrier, the bandwidth occupied by the first frequency domain signal specifically includes the 1st subcarrier to the 12th subcarrier, that is, the bandwidth occupied by the first frequency domain signal includes 12 subcarriers.

In a possible implementation, the first signal meets at least one of the following: A difference between a ratio of an amplitude value of a high level to an amplitude value of a low level in the first signal and a natural constant e is less than or equal to a first value; an amplitude value of a high-level signal in the first signal is associated with an amplitude value of a high-level signal in the second signal, and an amplitude value of a low-level signal in the first signal is associated with an amplitude value of a low-level signal in the second signal; an amplitude value of a high-level signal in the first signal is higher than an amplitude value of a high-level signal in the second signal; or an amplitude value of a low-level signal in the first signal is higher than an amplitude value of a low-level signal in the second signal. Specifically, when the first signal and the second signal carry the same M amplitude shift keying modulation symbols, the signal sending device increases at least one of the amplitude value of the high-level signal in the second signal and the amplitude value of the low-level signal in the second signal, to obtain the amplitude value of the first signal through conversion.

Optionally, the first value is 0 or a value close to 0, for example, 0.1, 0.2, or 0.3. When the first value is close to 0, the first value depends on a magnitude of an error. The error may include an error of an internal device of the signal sending device (or the signal receiving device), a quantization error generated in a process in which the signal sending device obtains the first signal through mapping of a QAM or PSK modulation symbol, a mathematical operation approximation error (for example, an error generated in a series expansion operation) generated in a process in which the signal sending device generates the first signal, and another error. This is not limited herein. Herein, a specific error is allowed between the first value and 0. This better helps the signal sending device reduce implementation complexity and storage overheads of sending the first signal. For example, an existing QAM or PSK modulation symbol is used for mapping and sending, and no additional modulation symbol needs to be defined, thereby reducing the storage overheads of the signal sending device.

Optionally, there is an association relationship between the amplitude values of the high level and the low level in the second signal and the amplitude values of the high level and the low level in the second signal. For example, the amplitude value of the high level in the first signal is a power of the natural constant e, a coefficient of the power is the amplitude value of the high level in the second signal, the amplitude value of the low level in the first signal is a power of the natural constant, and a coefficient of the power is the amplitude value of the low level in the second signal. The amplitude value of the high level in the first signal is the amplitude value of the high level in the second signal plus a specific value (for example, the specific value is 1), or the amplitude value of the low level in the first signal is the amplitude value of the low level in the second signal plus a specific value (for example, the specific value is 1).

For example, the amplitude value of the high level in the second signal is 1 and the amplitude value of the low level is 0; and the amplitude value of the high level in the first signal is e and the amplitude value of the low level is 1, or the amplitude value of the high level in the first signal is $e/\sqrt{e^2 + 1}$ + 1 and the amplitude value of the low level is $1/\sqrt{e^2 + 1}$.

In a possible implementation, a signal obtained through Hilbert transform of the second signal is a third signal, and a phase of the first signal is associated with the third signal. Specifically, when the first signal and the second signal carry the same M amplitude shift keying modulation symbols, the signal sending device converts the signal (that is, the third signal) obtained through the Hilbert transform of the second signal into the phase of the first signal. When spectral efficiency of transmission of amplitude shift keying modulation information is not affected, in a manner of converting the signal obtained through the Hilbert transform into the phase, impact of the signal obtained through the Hilbert transform on envelope detection demodulation can be effectively reduced or eliminated, thereby improving performance of demodulating a received signal by the signal receiving device, to further improve communication reliability and increase a signal transmission coverage distance.

In addition, that a phase of the first signal is associated with the third signal includes: A value of the phase of the first signal is equal to that of the third signal, or a value of the phase of the first signal is directly proportional to that of the third signal. Therefore, when the first signal and the second signal carry the same M amplitude shift keying modulation symbols, the signal sending device determines, as the phase of the first signal, a value (or a value that is in direct proportion to the value) of the signal (that is, the third signal) obtained through the Hilbert transform of the second signal, to effectively eliminate impact of the signal obtained through the Hilbert transform on envelope detection demodulation performance.

In a possible implementation, the phase of the first signal is equal to the third signal, the ratio of the high level to the low level in the first signal is equal to $e^{z1} / e^{z2}$, and z1 and z2 are equal to values of the high level and the low level in the second signal. For example, the first signal satisfies:

$$a(t) = e^{s(t)+j\hat{s}(t)}.$$

a(t) represents the first signal, e is the natural constant, s(t) represents the second signal, and ŝ(t) represents the third signal.

It should be understood that, in this application, a value of a symbol j is $\sqrt{-1}$, and a signal part (for example, jŝ(t)) multiplied by the symbol j represents an imaginary part of an actually sent signal, that is, a Q-channel signal of the sent signal. Similarly, a signal part (for example, s(t)) that does not include the symbol j in the actually sent signal represents a real part of the actually sent signal, that is, an I-channel signal of the sent signal. A difference between a phase of a carrier signal corresponding to the I-channel signal and a phase of a carrier signal corresponding to the Q-channel signal is 90 degrees.

It should be noted that, for an unknown number (or referred to as an unknown function, denoted as x), Taylor series expansion of $e^x e^x$ may be represented as:

$$e^x = 1 + x + x^2/2.$$

Therefore, for $a(t) = e^{s(t)+j\hat{s}(t)}$, the first signal may alternatively be represented as: $a(t) = 1 + m(t) + m(t)^2/2$ or $a(t) = 1 + m(t)$; or

$$a(t) = 1 + m(t) + \frac{m(t)^2}{2} + o(m(t)^2).$$

$o(m(t)^2)$ represents a higher order power term of $m(t)^2$.

m(t) satisfies:

$$m(t) = s(t) + j\hat{s}(t).$$

a(t) represents the first signal, e is the natural constant, s(t) represents the second signal, and ŝ(t) represents the third signal.

It should be understood that, in actual application of the solution, the signal sending device may generate the first signal according to any one of the foregoing plurality of implementations of the first signal, and a specific signal deviation may be generated in the process of generating the first signal. The signal deviation may be generated due to the error of the internal device of the signal sending device, the quantization error generated in the process in which the signal sending device obtains the first signal through the mapping of the QAM or PSK modulation symbol, the mathematical operation approximation error (for example, the error generated in the series expansion operation) generated in the process in which the signal sending device generates the first signal, and the another error that may exist. This is not limited herein.

According to the foregoing technical solution, although the signal sending device sacrifices a specific ratio of a high level to a low level in the amplitude shift keying modulation signal, that is, a modulation depth of the amplitude shift keying modulation, the spectral efficiency of sending the amplitude shift keying modulation signal is effectively improved in the solution. In addition, in a manner of transferring the value of the signal obtained through the Hilbert transform of the second signal to a phase domain of the first signal, the impact of the signal obtained through the Hilbert transform on the envelope detection demodulation performance of the first signal is effectively eliminated.

It can be learned from the foregoing implementation process that, in step S401, the signal sending device may generate the first signal based on another signal (for example, the second signal or the third signal) in a plurality of implementations. For example, the following describes, with reference to implementations shown in FIG. 6a to FIG. 6h, an example of the process in which the signal sending device generates the first signal.

In an implementation example, before the signal sending device generates the first signal in step S401, the signal sending device may determine the second signal. In the following implementation example, an example in which the bandwidth occupied by the second frequency domain signal of the second signal in frequency domain is p RBs (12p subcarriers) is used for description, where p is a positive integer.

FIG. 6a shows an implementation example in which the signal sending device generates the second signal s(t). The following process is included.

Step A1: Map the second frequency domain signal to the p RBs in frequency domain.

In step A1, a combination of an amplitude shift keying modulation symbol {0} and an amplitude shift keying modulation symbol {1} in one OFDM symbol is obtained based on a sent information bit.

For example, the second frequency domain signal may be obtained in a discrete Fourier transform-spread-orthogonal frequency division multiplexing (discrete fourier transform-spread-orthogonal frequency division multiplexing, DFT-s-OFDM) manner. The symbol {0} and the symbol {1} carried in the first signal are matched with two modulation symbols in which a real part value is equal to an imaginary part value (45° quadrant) in QAM modulation symbols or matched with a time domain signal of two modulation symbols whose values are {0+0j} and {1+1j}, q-point DFT or FFT is performed on the time domain signal, and 12*p central values are taken to obtain the second frequency domain signal.

Optionally, in step A1, the second frequency domain signal may be obtained based on a DFT-s-OFDM signal processing procedure, or the second frequency domain signal may be obtained based on a cyclic prefixed orthogonal frequency division multiplexing (cyclic prefixed orthogonal frequency division multiplexing, CP-OFDM) signal processing procedure. Optionally, the second frequency domain signal is 12*p values of center bandwidth of a sinc signal, and main lobe bandwidth of the sinc signal is p RBs. This is not limited herein.

Step A2: Perform IFFT transform on the second frequency domain signal to obtain the second signal.

In step A2, power-of-2-point IFFT transform is performed on the second frequency domain signal obtained in step A1 to obtain the second signal. The M amplitude shift keying modulation symbols carried by the second signal correspond to a to-be-sent information bit in the signal.

Specifically, in step A1, a value of a signal mapped to each subcarrier is 0 or 1, or the real part value is equal to the imaginary part value in the QAM modulation symbol, where values of signals mapped to every two adjacent subcarriers are the same. In step A1, DFT transform is performed on a mapped signal to obtain the second frequency domain signal, and then the IFFT transform is performed in step A2 to generate the second signal.

Optionally, in the QAM modulation symbols, when the real part value is equal to the imaginary part value, a modulation symbol whose modulus value is closest to 0 corresponds to the amplitude shift keying modulation symbol {0}, or a modulation symbol whose modulus value is closest to 1 corresponds to the amplitude shift keying modulation symbol {1}.

In addition, in the implementation process shown in FIG. 6a, a subcarrier spacing of 15 kHz is used as an example. For an implementation process of a time-frequency domain diagram of generating a double sideband amplitude shift keying signal s(t), refer to the process shown in FIG. 3.

Based on the implementation process shown in FIG. 6a, orthogonalization is ensured between a frequency domain subcarrier corresponding to a signal and a subcarrier of another signal in the OFDM system while the amplitude shift keying modulation is ensured to be performed on the signal, and it is ensured that when the double sideband amplitude shift keying modulation signal is generated, there is no interference of subcarrier non-orthogonalization to the another signal in the OFDM system, to effectively generate the double sideband amplitude shift keying modulation signal in the OFDM system.

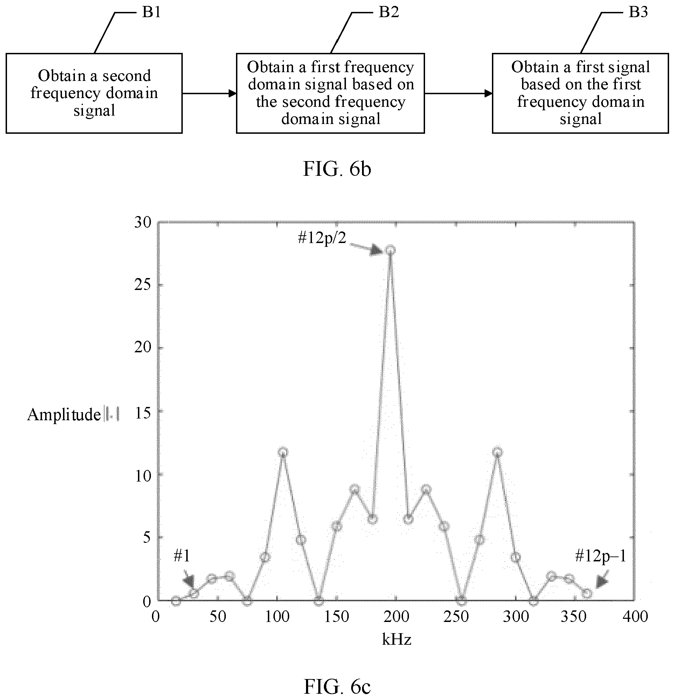

In a possible implementation, a possible implementation in which the sending device generates the first signal through frequency domain processing in step S401 is shown in FIG. 6b.

Step B1: Obtain the second frequency domain signal.

Step B2: Obtain the first frequency domain signal based on the second frequency domain signal.

Step B3: Obtain the first signal based on the first frequency domain signal.

For example, a diagram of an implementation process of step B2 in an implementation process shown in FIG. 6b is shown in FIG. 6c. In FIG. 6c, an example in which a horizontal coordinate represents a frequency domain location in a unit of kHz, and a vertical coordinate represents an amplitude (amplitude) (or referred to as an amplitude value) is used. In FIG. 6c, values of signals mapped to subcarriers of #1 to $\#\frac{12p}{2}$ in the second frequency domain signal obtained in step B1 are reserved to obtain the first frequency domain signal, and values of signals mapped to subcarriers of $\#\frac{12p}{2}$ to #12p - 1 are set to 0, that is, an upper sideband signal in the second frequency domain signal is determined as the first frequency domain signal (or values of signals mapped to subcarriers of #1 to $\#\frac{12p}{2}$ are set to 0, and values of other signals mapped to subcarriers of $\#\frac{12p}{2} + 1$ to #12p - 1 are reserved to obtain a frequency domain signal, that is, a lower sideband signal in the second frequency domain signal is determined as the first frequency domain signal). Then, in step B3, the signal sending device performs IFFT processing on the first frequency domain signal obtained in step B2 to obtain the first signal.

Optionally, after DFT is performed on the first signal, a value of a signal mapped to a subcarrier of #0 is a fixed value, for example, 0.

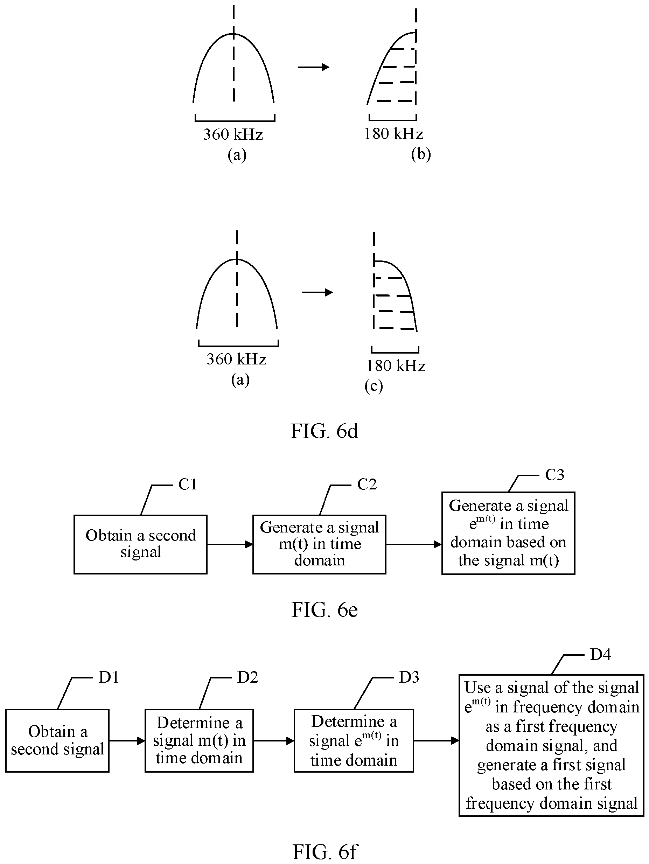

For example, a diagram of an implementation process of step B3 in the implementation process shown in FIG. 6b is shown in FIG. 6d.

As shown in (a) in FIG. 6d, an example in which the bandwidth occupied by the second frequency domain signal is 360 kHz is used. If it is determined that a frequency domain signal mapped to an upper sideband subcarrier of the second frequency domain signal is the first frequency domain signal, a determined part is a part of 180 kHz shown in (b) in FIG. 6d. If it is determined that a frequency domain signal mapped to a lower sideband subcarrier of the second frequency domain signal is the first frequency domain signal, a determined part is a part of 180 kHz shown in (c) in FIG. 6d.

Specifically, through steps B1, B2, and B3, under the criterion of ensuring the subcarrier orthogonalization in the OFDM system, a single sideband amplitude shift keying modulation signal is effectively generated, so that the spectral efficiency of the amplitude shift keying modulation signal is improved to 100%, and effective coexistence with the existing OFDM system is implemented, to avoid spectrum interference to the existing OFDM system. In addition, in the manner of directly taking half of the second frequency domain signal, implementation and calculation complexity of generating the first frequency domain signal and the subsequent first signal are not increased.

In a possible implementation, a possible implementation in which the sending device generates the first signal through time domain processing in step S401 is shown in FIG. 6e. An implementation process includes the following steps.

C1: Obtain the second signal s(t).

It should be understood that, for an implementation in which the signal sending device obtains the second signal, refer to the implementation process shown in FIG. 6a. Details are not described herein again.

C2: Determine a signal $m(t)=s(t)\pm j\hat{}(t)$ in time domain.

C3: Generate a signal $e^{m(t)}$ (that is, the first signal a(t) is denoted as $e^{m(t)}$) in time domain based on the signal m(t).

It should be understood that the signal $e^{m(t)}$ generated by the signal sending device in step C3 may be the first signal generated by the signal sending device in step S401 in the method shown in FIG. 4.

Specifically, because frequency domain bandwidth of signals x and $e^x$ remains unchanged, and Taylor series expansion of $e^x$ is $e^x = 1 + x + x^2/2 + O(x^2)$, frequency domain bandwidth of the signals m(t) and $e^{m(t)}$ remains unchanged, and $e^{m(t)}$ may maintain a single sideband feature of a single sideband signal. In addition, in $e^{m(t)} = e^{s(t)+j\hat{s}(t)}$, s(t) is transferred to a phase domain in which only the signal is affected. Therefore, signal envelope is affected only by the original baseband signal s(t). Envelope detection demodulation performance of the single sideband signal can be effectively improved by using the single sideband signal in the design method. In addition, the ratio of the high level to the low level (or a low level corresponding to a bit 0 to a high level corresponding to a bit 1) in the first signal generated in step C2 is equal to the natural constant e or approaches the natural constant e, and the phase of the first signal is associated with $\hat{s}(t)$. Optionally, the phase of the first signal is equal to $\hat{s}(t)$ or directly proportional to $\hat{s}(t)$.

Optionally, the first signal a(t) may be represented in a plurality of forms, including:

$$a(t) = e^{m(t)};$$

$$a(t) = 1 + m(t) + m^2(t)/2\,;$$

or

$$a(t) = 1 + m(t).$$

Specifically, after the amplitude shift keying double sideband modulation signal s(t) is obtained in step C1, m(t) =s(t)±js^(t) transform is performed on the double sideband modulation signal in time domain to generate the single sideband signal m(t), where frequency domain signal bandwidth corresponding to m(t) is p/2 RBs (12p/2 subcarriers). Then, in step C3, the first signal is generated through transform in time domain.

The single sideband amplitude shift keying modulation signal is effectively generated in the OFDM system through C1, C2, and C3, so that the spectral efficiency of the amplitude shift keying modulation is improved to 100%. In addition, ŝ(t) is effectively transferred to a phase domain of the single sideband modulation signal, so that performance of performing envelope detection demodulation on the first signal by the receive end is not affected.

It can be learned from the foregoing implementation process that the signal m(t) generated by the signal sending device in step B3 (or step C2) may be the first signal generated by the signal sending device in step S401 in the method shown in FIG. 4. However, because a signal that is obtained through Hilbert transform and that is included in the signal m(t) may affect a signal demodulation process of the signal receiving device, the signal m(t) may be further processed in time domain in step C3, and a processing result is used as the first signal generated by the signal sending device in step S401.

In a possible implementation, an implementation in which the sending device obtains the first signal $e^{m(t)}$ through frequency domain processing after determining the second frequency domain signal is shown in FIG. 6f, and includes the following steps.

D1: Obtain the second frequency domain signal s(t).

D2: Determine a signal m(t) = s(t) + jŝ(t) in time domain.

D3: Determine a signal $e^{m(t)}$ in time domain.

D4: Use a signal of the signal $e^{m(t)}$ in frequency domain as the first frequency domain signal, and generate the first signal based on the first frequency domain signal.

It should be understood that, for an implementation process of step D1 to step D3, refer to the implementation process of step C1 to step C3, and corresponding technical effects are implemented. Details are not described herein again.

Specifically, in step D3, after the sending device determines the signal $e^{m(t)}$ in time domain, in step D4, the sending device determines that the signal of the time domain signal $e^{m(t)}$ in frequency domain is the first frequency domain signal, maps the first frequency domain signal to p/2 RBs, and performs IFFT on the first frequency domain signal to obtain the first signal.

A single sideband amplitude shift keying modulation signal is effectively generated in the OFDM system through D1, D2, and D3, so that under the criterion of ensuring the subcarrier orthogonalization in the OFDM system, the spectral efficiency of the amplitude shift keying modulation is improved to 100%. In addition, ŝ(t) is effectively transferred to a phase domain of the single sideband signal, so that envelope detection demodulation performance of the first signal is not affected.

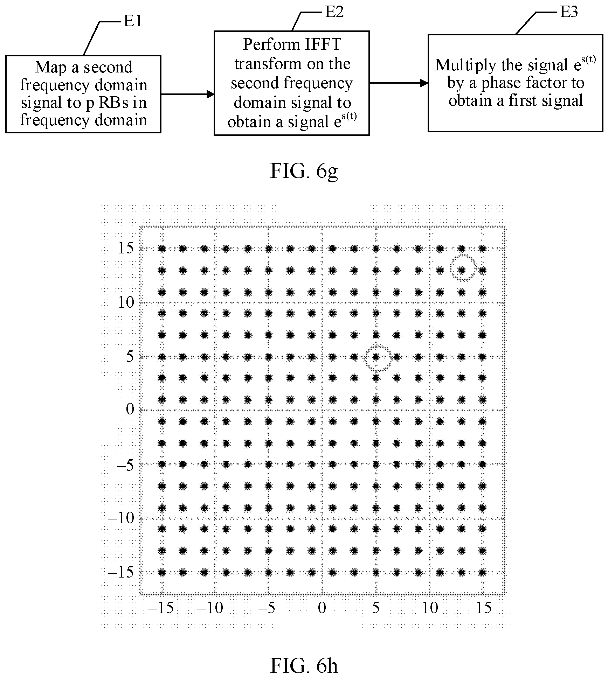

In a possible implementation, an implementation in which the sending device obtains the first signal through time-frequency domain processing is shown in FIG. 6g, and includes the following steps.

E1: Map the second frequency domain signal to the p RBs in frequency domain.

It should be understood that a process of step E1 is similar to that of step A1, and a difference lies in that a ratio of level amplitude values of two mapped modulation symbols is the natural constant e or a difference between the ratio and the natural constant e is less than a predefined value. For example, as shown in FIG. 6h, a ratio of amplitude values or modulus values of selected target QAM symbols X1 and X2 is closest to the natural constant e. Optionally, a 256-QAM modulation symbol is used as an example, and X1 and X2 may respectively be a 3rd modulation symbol 0.3825 + 0.3835j and a 7th modulation symbol 0.9971 + 0.9971j in modulation symbols in which a real part is equal to an imaginary part. In addition, modulation symbols mapped to a subcarrier with an odd index and a subcarrier with an even index are the same (or modulation symbols mapped to every two subcarriers are the same), and the signal is mapped to the frequency domain after DFT, and becomes the second frequency domain signal.

E2: Perform IFFT transform on the second frequency domain signal to obtain a signal $e^{s(t)}$.

It should be understood that a process of step E2 is similar to that of step A2, and a difference lies in that a ratio of amplitude values of the double sideband amplitude shift keying modulation signal in the second signal generated in step A2 is a positive infinity (that is, a ratio of 1 to 0), and steps E1 and E2 enable a ratio of amplitude values of a generated double sideband amplitude shift keying modulation signal to be the natural constant e (that is, a ratio of e to 1).

E3: Multiply the signal $e^{s(t)}$ by a phase factor to obtain the first signal.

The phase factor in step E3 is associated with ŝ(t). Optionally, the phase factor in step E3 may be denoted as $e^{jŝ(t)}$ or $e^{jkŝ(t)}$, where k is a positive integer greater than 1.

Specifically, in step E3, a single sideband modulation amplitude shift keying modulation signal is effectively obtained, and s(t) affects only a phase domain of the signal. Therefore, in this case, envelope of the single sideband modulation signal is affected only by the original modulation signal s(t). According to the design method, the single sideband signal is effectively obtained, thereby improving transmission efficiency, and effectively improving envelope detection demodulation performance of the single sideband signal.

Therefore, based on the implementation process shown in FIG. 6f or FIG. 6g, a single sideband feature of the generated modulation signal is effectively ensured, and impact of a (second) harmonic term of ŝ(t) on the amplitude envelope of the single sideband signal is effectively eliminated. Because ŝ(t) is changed to $e^{j\hat{s}(t)}$ through exponential transformation, only a phase of the single sideband signal is affected, and the amplitude envelope is affected only by $e^{s(t)}$. In this way, when the receive end performs envelope detection, an amplitude shift keying baseband modulation signal can be effectively restored. Therefore, the demodulation performance of the signal receiving device can be improved while the spectral efficiency of the signal is improved.

In a possible implementation, in the method shown in FIG. 4, the method further includes: The signal sending device sends first indication information, where the first indication information indicates that a signal modulation scheme is a single sideband modulation scheme. Correspondingly, the signal receiving device receives the first indication information, so that the signal receiving device determines, based on the first indication information, that the modulation scheme of the first signal is the single sideband modulation scheme. Specifically, in a process in which an implementation of introducing a signal obtained through Hilbert transform of a to-be-sent signal is used to eliminate a wasted part in a spectrum resource of the to-be-sent signal, before the elimination, the to-be-sent signal may be referred to as a double sideband modulation signal, and after the elimination, the to-be-sent signal may be referred to as a single sideband modulation signal. Because the first signal sent by the signal sending device is a signal after the elimination, the signal receiving device may further receive the first indication information indicating that the signal modulation scheme is the single sideband modulation scheme, so that the signal receiving device receives and parses the first signal based on the first indication information, to determine the bit information corresponding to the first signal.

Optionally, the first indication information is carried in a preamble sequence, downlink control information (downlink control information, DCI), common signaling (for example, paging information or group paging information), common media access control (media access control, MAC) signaling, or radio resource control (radio resource control, RRC) signaling, or the first indication information is carried in another message or other signaling. This is not limited herein.

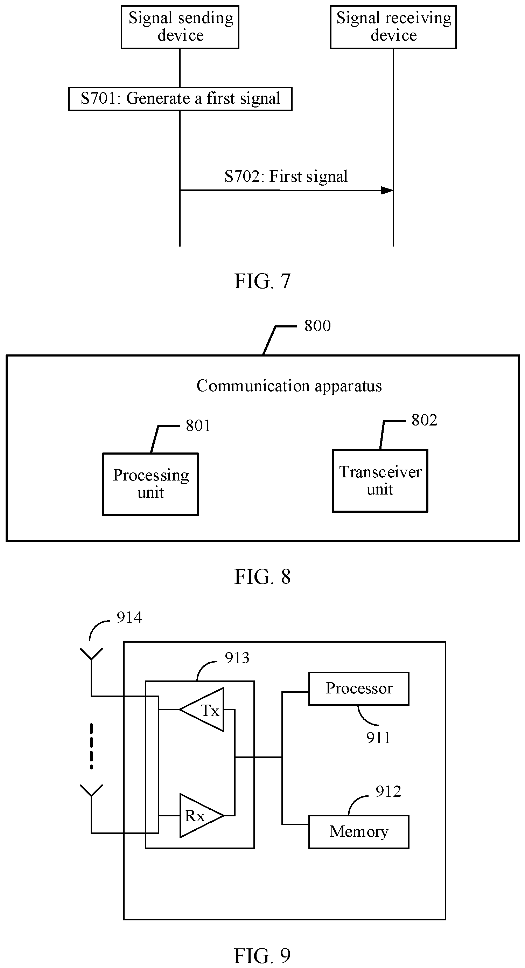

FIG. 7 is a diagram of a communication method according to this application. The method includes the following steps.

S701: A signal sending device generates a first signal.

In this embodiment, the signal sending device generates the first signal in step S701, where both the first signal and a second signal are amplitude shift keying modulation signals, a signal obtained through Hilbert transform of the second signal is a third signal, and a phase of the first signal is associated with the third signal.

Specifically, the first signal generated by the signal sending device in step S701 meets at least one of the following: A difference between a ratio of an amplitude value of a high level to an amplitude value of a low level in the first signal and a natural constant e is less than or equal to a first value; or an amplitude value of a high-level signal in the first signal is associated with an amplitude value of a high-level signal in the second signal, and an amplitude value of a low-level signal in the first signal is associated with an amplitude value of a low-level signal in the second signal.

Optionally, the first value is 0, that is, the ratio of the amplitude value of the high level to the amplitude value of the low level in the first signal is equal to e. When the first value is close to 0, the first value depends on a magnitude of an error. The error may include an error of an internal device of the signal sending device (or a signal receiving device), a quantization error generated in a process in which the signal sending device obtains the first signal through mapping of a QAM or PSK modulation symbol, a mathematical operation approximation error (for example, an error generated in a series expansion operation) generated in a process in which the signal sending device generates the first signal, and another error. This is not limited herein.

Optionally, there is an association relationship between the amplitude values of the high level and the low level in the second signal and the amplitude values of the high level and the low level in the second signal. For example, the amplitude value of the high level in the first signal is a power of the natural constant e, a coefficient of the power is the amplitude value of the high level in the second signal, the amplitude value of the low level in the first signal is a power of the natural constant, and a coefficient of the power is the amplitude value of the low level in the second signal. The amplitude value of the high level in the first signal is the amplitude value of the high level in the second signal plus a specific value (for example, the specific value is 1), or the amplitude value of the low level in the first signal is the amplitude value of the low level in the second signal plus a specific value (for example, the specific value is 1).

For example, the amplitude value of the high level in the second signal is 1 and the amplitude value of the low level is 0; and the amplitude value of the high level in the first signal is e and the amplitude value of the low level is 1, or the amplitude value of the high level in the first signal is $e/\sqrt{e^2 + 1}$ and the amplitude value of the low level is $1/\sqrt{e^2 + 1}$.

S702: The signal sending device sends the first signal.

In this embodiment, after the signal sending device generates the first signal in step S701, the signal sending device sends the first signal in step S702. Correspondingly, the signal receiving device receives the first signal in step S402.

In a possible implementation, the first signal sent by the signal sending device in step S702 meets at least one of the following: The amplitude value of the high-level signal in the first signal is higher than the amplitude value of the high-level signal in the second signal; or the amplitude value of the low-level signal in the first signal is higher than the amplitude value of the low-level signal in the second signal. Specifically, that an amplitude value of a high-level signal in the first signal is associated with an amplitude value of a high-level signal in the second signal, and an amplitude value of a low-level signal in the first signal is associated with an amplitude value of a low-level signal in the second signal includes: The amplitude value of the high-level signal in the first signal is higher than the amplitude value of the high-level signal in the second signal; or the amplitude value of the low-level signal in the first signal is higher than the amplitude value of the low-level signal in the second signal. Therefore, on the premise that the second signal carries a same amplitude shift keying modulation signal, the signal sending device sends the first signal. When converting the third signal into the phase of the first signal, the signal sending device increases the amplitude value of the high-level signal in the amplitude shift keying modulation signal carried by the second signal and/or the amplitude value of the low-level signal in the second signal, to obtain the amplitude value of the first signal.

In a possible implementation, that a phase of the first signal sent by the signal sending device in step S702 is associated with the third signal includes: A value of the phase of the first signal is equal to that of the third signal, or a value of the phase of the first signal is directly proportional to that of the third signal. Specifically, the value of the phase of the first signal sent by the signal sending device in step S702 is equal to that of the third signal, or the value of the phase of the first signal sent by the signal sending device in step S702 is directly proportional to that of the third signal. Therefore, when the first signal and the second signal carry the same ASK modulation symbol, the signal sending device determines, as the phase of the first signal, a value (or a value that is in direct proportion to the value) of the signal (that is, the third signal) obtained through the Hilbert transform of the second signal, to reduce or eliminate impact of the signal obtained through the Hilbert transform on envelope detection demodulation performance.

In a possible implementation, the phase of the first signal is equal to the third signal, the ratio of the high level to the low level in the first signal is equal to $e^{z1}/e^{z2}$, and z1 and z2 are equal to values of the high level and the low level in the second signal. For example, the first signal satisfies:

$$a(t) = e^{s(t)+j\hat{s}(t)}.$$

a(t) represents the first signal, e is the natural constant, s(t) represents the second signal, and ŝ(t) represents the third signal.

Optionally, s(t) + jŝ(t) represents a fourth signal.

It should be understood that, in this application, a value of a symbol j is $\sqrt{-1}$, and a signal part (for example, jŝ(t)) multiplied by the symbol j represents an imaginary part of an actually sent signal, that is, a Q-channel signal of the sent signal. Similarly, a signal part (for example, s(t)) that does not include the symbol j in the actually sent signal represents a real part of the actually sent signal, that is, an I-channel signal of the sent signal. A difference between a phase of a carrier signal corresponding to the I-channel signal and a phase of a carrier signal corresponding to the Q-channel signal is 90 degrees.

It should be noted that, for an unknown number (or referred to as an unknown function, denoted as x), Taylor series expansion of $e^x$ may be represented as:

$$e^x = 1 + x + x^2/2.$$

Therefore, for $a(t) = e^{s(t)+j\hat{s}(t)}$, the first signal may alternatively be represented as: $a(t) = 1 + m(t) + met)^2/2$ or $a(t) = 1 + m(t)$; or

$$a(t) = 1 + m(t) + \frac{m(t)^2}{2} + o(m(t)^2).$$

$o(m(t)^2)$ represents a higher order power term of $m(t)^2$.

m(t) satisfies:

$$m(t) = s(t) + j\hat{s}(t).$$

a(t) represents the first signal, e is the natural constant, s(t) represents the second signal, ŝ(t) represents the third signal, and s(t) + jŝ(t) represents the fourth signal (that is, m(t) represents the fourth signal).

It should be understood that, in actual application of the solution, the signal sending device may generate the first signal according to any one of the foregoing plurality of implementations of the first signal, and a specific signal deviation may be generated in the process of generating the first signal. The signal deviation may be generated due to the error of the internal device of the signal sending device, the quantization error generated in the process in which the signal sending device obtains the first signal through the mapping of the QAM or PSK modulation symbol, the mathematical operation approximation error (for example, the error generated in the series expansion operation) generated in the process in which the signal sending device generates the first signal, and the another error that may exist. This is not limited herein.

According to the foregoing technical solution, although the signal sending device sacrifices a specific ratio of a high level to a low level in the amplitude shift keying modulation signal, that is, a modulation depth of the amplitude shift keying modulation, spectral efficiency of sending the amplitude shift keying modulation signal is effectively improved in the solution. In addition, in a manner of transferring the value of the signal obtained through the Hilbert transform of the second signal to a phase domain of the first signal, the impact of the signal obtained through the Hilbert transform on the envelope detection demodulation performance of the first signal is effectively eliminated.

It can be learned from the foregoing implementation process that, in step S701, the signal sending device may generate the first signal based on another signal (for example, the third signal, the second signal, or the fourth signal) in a plurality of implementations. For an implementation process thereof, refer to the implementation processes shown in FIG. 6a to FIG. 6h, and corresponding technical effects are implemented. Details are not described herein again.

It may be understood that the first signal sent by the signal sending device in step S702 may alternatively be described from a perspective of a frequency domain. The following further describes implementations of the first signal and a related signal in frequency domain.

In a possible implementation, a signal of the first signal in frequency domain sent by the signal sending device in step S702 is a first frequency domain signal, and a signal of the second signal in frequency domain is a second frequency domain signal, where bandwidth occupied by the second frequency domain signal is twice that occupied by the first frequency domain signal. Specifically, the bandwidth occupied by the second frequency domain signal is twice that occupied by the first frequency domain signal. When the first signal sent by the signal sending device and the second signal carry the same amplitude shift keying modulation symbol, bandwidth occupied by the first signal is half of that occupied by the second signal, to improve the spectral efficiency (that is, spectral efficiency of the first signal is twice that of the second signal).

Optionally, the third signal is an imaginary part of the fourth signal, and the second signal is a real part of the fourth signal. The signal of the second signal in frequency domain is the second frequency domain signal, and a signal of the fourth signal in frequency domain is a third frequency domain signal, where the bandwidth occupied by the second frequency domain signal is twice that occupied by the third frequency domain signal. The bandwidth occupied by the second frequency domain signal is twice that occupied by the third frequency domain signal. In other words, bandwidth occupied by the fourth signal is enabled, based on IQ superimposition of the third signal and the second signal, to be reduced by half compared with that occupied by the second signal, so that spectral efficiency of the fourth signal used as a transmission signal is twice that of the second signal used as a transmission signal.

Further, optionally, the second frequency domain signal is a signal whose amplitude value is symmetrical about a first subcarrier, and a quantity of subcarriers of the bandwidth occupied by the second frequency domain signal is N.

When N is an even number, the first subcarrier is an $(N/2)^{th}$ subcarrier or an $((N/2) + 1)^{th}$ subcarrier.

Optionally, when N is the even number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the even number, a start location of the bandwidth occupied by the first frequency domain signal is a $2^{nd}$ subcarrier of the bandwidth occupied by the second frequency domain signal, and an end location of the bandwidth occupied by the first frequency domain signal is the first subcarrier.

When N is an odd number, the first subcarrier is an $(\lfloor N/2 \rfloor + 1)^{th}$ subcarrier, and $\lfloor N/2 \rfloor$ represents taking the floor of N/2.

Optionally, when N is the odd number, a start location of the bandwidth occupied by the first frequency domain signal is the first subcarrier, and an end location of the bandwidth occupied by the first frequency domain signal is a last subcarrier of the bandwidth occupied by the second frequency domain signal.

Optionally, when N is the odd number, a start location of the bandwidth occupied by the first frequency domain signal is a $1^{st}$ subcarrier of the bandwidth occupied by the second frequency domain signal, and an end location of the bandwidth occupied by the first frequency domain signal is the first subcarrier.

A signal to which the third frequency domain signal is mapped in the bandwidth occupied by the third frequency domain signal is the same as that to which the second frequency domain signal is mapped in the bandwidth occupied by the third frequency domain signal.

Specifically, the signal (that is, the second frequency domain signal) of the second signal in frequency domain is the signal whose amplitude value is symmetrical about the first subcarrier. The symmetry of the amplitude value may mean that frequency domain signals on two sides of the first subcarrier are mutually conjugate-symmetric signals, or frequency domain signals on two sides of the first subcarrier may be signals with an equal modulus value (or an equal amplitude value). In addition, the bandwidth occupied by the signal (that is, the third frequency domain signal) of the fourth signal in frequency domain, the first subcarrier, and the bandwidth occupied by the second frequency domain signal meet the foregoing relationship. In other words, the bandwidth occupied by the third frequency domain signal is reduced to half of that occupied by the second frequency domain signal, to improve spectral efficiency in a scenario in which the third frequency domain signal is used as a transmission signal.

Optionally, that "a start location of the bandwidth occupied by the third frequency domain signal is the first subcarrier, and an end location of the bandwidth occupied by the third frequency domain signal is a last subcarrier of the bandwidth occupied by the second frequency domain signal; or a start location of the bandwidth occupied by the third frequency domain signal is a 1st subcarrier of the bandwidth occupied by the second frequency domain signal, and an end location of the bandwidth occupied by the third frequency domain signal is the first subcarrier" may be expressed as that "the third frequency domain signal is a first half of the second frequency domain signal; or the third frequency domain signal is a second half of the second frequency domain signal"; may be expressed as that "the third frequency domain signal is the same as a first half of the second frequency domain signal; or the third frequency domain signal is the same as a second half of the second frequency domain signal"; or may be expressed as that "the third frequency domain signal is a frequency domain signal that includes the first subcarrier in the second frequency domain signal and that is mapped to a first half of the first subcarrier; or the third frequency domain signal is a frequency domain signal that includes the first subcarrier in the second frequency domain signal and that is mapped to a second half of the first subcarrier".

Optionally, the quantity of subcarriers of the bandwidth occupied by the second frequency domain signal is N, and numbers (or indexes) of the N subcarriers are contiguous. In other words, the bandwidth occupied by the second frequency domain signal includes N contiguously numbered (or indexed) subcarriers. Alternatively, the quantity of subcarriers of the bandwidth occupied by the second frequency domain signal is N, numbers (or indexes) of the N subcarriers are discontiguous, and the N discontiguously numbered subcarriers may be re-sorted to obtain N contiguously numbered subcarriers. Correspondingly, the first subcarrier is determined based on the N contiguously numbered (or indexed) subcarriers.

Optionally, the start location of the bandwidth may alternatively be expressed as a location of a 1st subcarrier of the bandwidth, a subcarrier start location of the bandwidth, or another expression. This is not limited herein. Similarly, the end location of the bandwidth may alternatively be expressed as a location of a last subcarrier of the bandwidth, a subcarrier end location of the bandwidth, a subcarrier termination location of the bandwidth, a termination location of the bandwidth, or another expression. This is not limited herein.

In a possible implementation, the first frequency domain signal meets at least one of the following: The bandwidth occupied by the first frequency domain signal is the same as that occupied by the third frequency domain signal; or a frequency domain location of the first frequency domain signal is the same as that of the third frequency domain signal. Specifically, the bandwidth occupied by the signal (that is, the first frequency domain signal) of the first signal in frequency domain is the same as that occupied by the signal (that is, the third frequency domain signal) of the fourth signal in frequency domain, or a frequency domain location of the signal (that is, the first frequency domain signal) of the first signal in frequency domain is the same as that of the signal (that is, the third frequency domain signal) of the fourth signal in frequency domain. In other words, the signal of the first signal in frequency domain may be a signal obtained by performing amplitude-phase transform on the signal of the fourth signal in frequency domain. In this way, the signal receiving device may receive, on the bandwidth (or the frequency domain location) corresponding to the fourth signal, the first signal obtained by performing amplitude-phase transform on the fourth signal, that is, the signal receiving device may receive the first signal without sensing the amplitude-phase transform of the fourth signal, to reduce processing complexity of the signal receiving device.

In a possible implementation, the implementation method shown in FIG. 4 further includes: The signal sending device sends first indication information, where the first indication information indicates that a signal modulation scheme is a single sideband modulation scheme. Correspondingly, the signal receiving device receives the first indication information indicating that the signal modulation scheme is the single sideband modulation scheme. Specifically, in a process in which an implementation of introducing a signal obtained through Hilbert transform of a to-be-sent signal is used to eliminate a wasted part in a spectrum resource of the to-be-sent signal, before the elimination, the to-be-sent signal may be referred to as a double sideband modulation signal, and after the elimination, the to-be-sent signal may be referred to as a single sideband modulation signal. Because the first signal sent by the signal sending device is a signal after the elimination, the signal sending device may further send the first indication information indicating that the signal modulation scheme is the single sideband modulation scheme, so that the signal receiving device receives and parses the first signal.

Frequency domain efficiency of the double sideband modulation signal differs by two times from that of the single sideband modulation signal, and symbol duration of the generated signal also differs by two times. Therefore, if the first indication information is not sent and a signal-to-noise ratio is low, when it is not easy for the signal receiving device to find a rising edge and a falling edge of the received signal during demodulation, the signal receiving device needs to know a length of the symbol duration, so that the signal receiving device can correctly find a symbol boundary of the received signal and demodulate the signal. Consequently, complexity is high. Therefore, after the signal receiving device receives the first indication information, reduction of complexity of parsing the first signal by the signal receiving device and reduction of a processing delay are facilitated.

Optionally, the first indication information is carried in a preamble sequence, downlink control information (downlink control information, DCI), common signaling (for example, paging information or group paging information), common media access control (media access control, MAC) signaling, or radio resource control (radio resource control, RRC) signaling, or the first indication information is carried in another message or other signaling. This is not limited herein.

For example, the signal sending device may indicate, by using one bit included in any one of the foregoing messages or pieces of signaling, whether a modulation scheme of subsequent data/signaling is a double sideband modulation scheme or a single sideband modulation scheme. For example, a value "0" indicates the double sideband modulation scheme, and a value "1" indicates the single sideband modulation scheme; or a value "1" indicates the double sideband modulation scheme, and a value "0" indicates the single sideband modulation scheme.

According to the foregoing technical solution, for the phase of the first signal sent by the signal sending device in step S702, the phase is associated with the third signal, that is, associated with the signal obtained through the Hilbert transform of the second signal. For the signal amplitude value of the first signal sent by the signal sending device in step S702, the difference between the ratio of the amplitude value of the high level to the amplitude value of the low level in the first signal and the natural constant e is less than or equal to the first value; or the amplitude value of the high-level signal in the first signal is associated with the amplitude value of the high-level signal in the second signal, and the amplitude value of the low-level signal in the first signal is associated with the amplitude value of the low-level signal in the second signal. In other words, when the first signal and the second signal carry the same ASK modulation symbol, when the signal sending device converts the signal (that is, the third signal) obtained through the Hilbert transform of the second signal into the phase of the first signal, the amplitude value of the second signal is affected, that is, the amplitude value of the second signal is converted into the amplitude value of the first signal. In addition, both the first signal and the second signal are the amplitude shift keying modulation signals. In this way, in a manner in which the first signal sent by the signal sending device is the amplitude shift keying modulation signal, the signal receiving device can be supported in performing demodulation in a non-coherent demodulation scheme. In addition, in a manner of converting the signal obtained through the Hilbert transform into a phase shift, the impact of the signal obtained through the Hilbert transform on the envelope detection demodulation performance can be reduced or eliminated, thereby improving performance of demodulating the received signal by the signal receiving device, to improve communication efficiency.

The foregoing describes embodiments of this application from a perspective of the methods. The following describes communication apparatuses in embodiments of this application from a perspective of specific apparatus implementations.

FIG. 8 is a diagram of a communication apparatus 800 according to an embodiment of this application. The communication apparatus 800 includes at least a processing unit 801 and a transceiver unit 802.

The communication apparatus 800 may be a signal sending device, the apparatus may be a component (for example, a processor, a chip, or a chip system) in the signal sending device, or the apparatus may be a logic module or software that can implement all or some functions of the signal sending device.

An example in which the communication apparatus 800 is an implementation of the signal sending device is used. The processing unit 801 is configured to generate a first signal, where the first signal carries M amplitude shift keying modulation symbols, the first signal is one orthogonal frequency division multiplexing OFDM symbol in time domain, the first signal is a first frequency domain signal in frequency domain, bandwidth occupied by the first frequency domain signal is half of that occupied by a second frequency domain signal, the second frequency domain signal is a second signal in time domain, the second signal carries the M amplitude shift keying modulation symbols, duration of the M amplitude shift keying modulation symbols carried by the first signal is the same as that of the M amplitude shift keying modulation symbols carried by the second signal, and M is a positive integer. The transceiver unit 802 is configured to send the first signal.

In a possible implementation, the transceiver unit 802 is further configured to send first indication information, where the first indication information indicates that a signal modulation scheme is a single sideband modulation scheme.

An example in which the communication apparatus 800 is an implementation of a signal receiving device is used. The processing unit 802 is configured to receive a first signal, where the first signal carries M amplitude shift keying modulation symbols, the first signal is one orthogonal frequency division multiplexing OFDM symbol in time domain, the first signal is a first frequency domain signal in frequency domain, bandwidth occupied by the first frequency domain signal is half of that occupied by a second frequency domain signal, the second frequency domain signal is a second signal in time domain, the second signal carries the M amplitude shift keying modulation symbols, duration of the M amplitude shift keying modulation symbols carried by the first signal is the same as that of the M amplitude shift keying modulation symbols carried by the second signal, and M is a positive integer. The processing unit 801 is configured to determine, based on the first signal, bit information corresponding to the M amplitude shift keying modulation symbols.

In a possible implementation, the transceiver unit 802 is further configured to receive first indication information, where the first indication information indicates that a signal modulation scheme is a single sideband modulation scheme.

An example in which the communication apparatus 800 is an implementation of the signal sending device is used. The processing unit 801 is configured to generate a first signal, where a phase of the first signal is associated with a third signal, the third signal is a signal obtained through Hilbert transform of a second signal, and both the first signal and the second signal are amplitude shift keying modulation signals.

The first signal meets at least one of the following:

a difference between a ratio of an amplitude value of a high level to an amplitude value of a low level in the first signal and a natural constant e is less than or equal to a first value; or
an amplitude value of a high-level signal in the first signal is associated with an amplitude value of a high-level signal in the second signal, and an amplitude value of a low-level signal in the first signal is associated with an amplitude value of a low-level signal in the second signal.

The processing unit 802 is configured to send the first signal.

In a possible implementation,
the processing unit 802 is further configured to send first indication information, where the first indication information indicates that a signal modulation scheme is a single sideband modulation scheme.

An example in which the communication apparatus 800 is an implementation of a signal receiving device is used. The processing unit 802 is configured to receive a first signal, where a phase of the first signal is associated with a third signal, the third signal is a signal obtained through Hilbert transform of a second signal, and both the first signal and the second signal are amplitude shift keying modulation signals.

The first signal meets at least one of the following:

a difference between a ratio of an amplitude value of a high level to an amplitude value of a low level in the first signal and a natural constant e is less than or equal to a first value; or
an amplitude value of a high-level signal in the first signal is associated with an amplitude value of a high-level signal in the second signal, and an amplitude value of a low-level signal in the first signal is associated with an amplitude value of a low-level signal in the second signal.

The processing unit 801 is configured to determine bit information corresponding to the first signal.

In a possible implementation,
the processing unit 802 is further configured to receive first indication information, where the first indication information indicates that a signal modulation scheme is a single sideband modulation scheme.

That the processing unit 801 is configured to determine bit information corresponding to the first signal includes: the processing unit 801 is configured to determine, based on the first indication information, the bit information corresponding to the first signal.

It should be noted that for content such as information execution processes of the units in the communication apparatus 800, refer to the descriptions in the foregoing method embodiments of this application. Details are not described herein again.

FIG. 9 is a diagram of a structure of a communication apparatus in the foregoing embodiments according to an embodiment of this application. The communication apparatus may specifically be the network device in the foregoing embodiments. For the structure of the communication apparatus, refer to the structure shown in FIG. 9.

The communication apparatus includes at least one processor 911, at least one memory 912, at least one transceiver 913, and one or more antennas 914. The processor 911, the memory 912, and the transceiver 913 are connected, for example, connected through a bus. In this embodiment of this application, the connection may include various interfaces, transmission lines, buses, or the like. This is not limited in this embodiment. The antenna 914 is connected to the transceiver 913.

In an implementation example, when the communication apparatus shown in FIG. 9 is the signal sending device in FIG. 4 and the related embodiment, the processor 911 is configured to generate a first signal, where the first signal carries M amplitude shift keying modulation symbols, the first signal is one orthogonal frequency division multiplexing OFDM symbol in time domain, the first signal is a first frequency domain signal in frequency domain, bandwidth occupied by the first frequency domain signal is half of that occupied by a second frequency domain signal, the second frequency domain signal is a second signal in time domain, the second signal carries the M amplitude shift keying modulation symbols, duration of the M amplitude shift keying modulation symbols carried by the first signal is the same as that of the M amplitude shift keying modulation symbols carried by the second signal, and M is a positive integer. The transceiver 913 is configured to send the first signal.

In another implementation example, when the communication apparatus shown in FIG. 9 is the signal receiving device in FIG. 4 and the related embodiment, the transceiver 913 is configured to receive a first signal, where the first signal carries M amplitude shift keying modulation symbols, the first signal is one orthogonal frequency division multiplexing OFDM symbol in time domain, the first signal is a first frequency domain signal in frequency domain, bandwidth occupied by the first frequency domain signal is half of that occupied by a second frequency domain signal, the second frequency domain signal is a second signal in time domain, the second signal carries the M amplitude shift keying modulation symbols, duration of the M amplitude shift keying modulation symbols carried by the first signal is the same as that of the M amplitude shift keying modulation symbols carried by the second signal, and M is a positive integer. The processor 911 is configured to determine, based on the first signal, bit information corresponding to the M amplitude shift keying modulation symbols.

In another implementation example, when the communication apparatus shown in FIG. 9 is the signal sending device in FIG. 7 and the related embodiment, the processor 911 is configured to generate a first signal, where a phase of the first signal is associated with a third signal, the third signal is a signal obtained through Hilbert transform of a second signal, both the first signal and the second signal are amplitude shift keying modulation signals, and the first signal meets at least one of the following: A difference between a ratio of an amplitude value of a high level to an amplitude value of a low level in the first signal and a natural constant e is less than or equal to a first value; or an amplitude value of a high-level signal in the first signal is associated with an amplitude value of a high-level signal in the second signal, and an amplitude value of a low-level signal in the first signal is associated with an amplitude value of a low-level signal in the second signal. The transceiver 913 is configured to send the first signal.

In another implementation example, when the communication apparatus shown in FIG. 9 is the signal receiving device in FIG. 7 and the related embodiment, the transceiver 913 is configured to receive a first signal, where a phase of the first signal is associated with a third signal, the third signal is a signal obtained through Hilbert transform of a second signal, both the first signal and the second signal are amplitude shift keying modulation signals, and the first signal meets at least one of the following: A difference between a ratio of an amplitude value of a high level to an amplitude value of a low level in the first signal and a natural constant e is less than or equal to a first value; or an amplitude value of a high-level signal in the first signal is associated with an amplitude value of a high-level signal in the second signal, and an amplitude value of a low-level signal in the first signal is associated with an amplitude value of a low-level signal in the second signal. The processor 911 is configured to determine bit information corresponding to the first signal.

It should be noted that for content such as execution processes of various devices in the communication apparatus shown in FIG. 9, refer to the descriptions in the foregoing method embodiments of this application. Details are not described herein again.

The processor 911 is mainly configured to: process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to: control the entire network device, execute the software program, and process the data of the software program. The processor 911 in FIG. 9 may integrate functions of the baseband processor and the central processing unit. Persons skilled in the art may understand that the baseband processor and the central processing unit may alternatively be independent processors and are interconnected by using a technology such as a bus. Persons skilled in the art may understand that the network device may include a plurality of baseband processors to adapt to different network standards, the network device may include a plurality of central processing units to enhance a processing capability of the network device, and components of the network device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be embedded in the processor, or may be stored in the memory in a form of the software program. The processor executes the software program to implement a baseband processing function.

The memory is mainly configured to store the software program and the data. The memory 912 may exist independently, and is connected to the processor 911. Optionally, the memory 912 may be integrated with the processor 911, for example, integrated into a chip. The memory 912 may store program code for executing the technical solutions in embodiments of this application, and the processor 911 controls the execution. Various types of executed computer program code may be considered as drivers of the processor 911.

FIG. 9 shows only one memory and one processor. In an actual network device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 913 may be configured to support receiving or sending of a radio frequency signal between the communication apparatus and a terminal, and the transceiver 913 may be connected to the antenna 914. The transceiver 913 includes a transmitter Tx and a receiver Rx. Specifically, the one or more antennas 914 may receive a radio frequency signal. The receiver Rx of the transceiver 913 is configured to: receive the radio frequency signal from the antenna, convert the radio frequency signal into a digital baseband signal or a digital intermediate frequency signal, and provide the digital baseband signal or the digital intermediate frequency signal for the processor 911, so that the processor 911 performs further processing, for example, demodulation processing and decoding processing, on the digital baseband signal or the digital intermediate frequency signal. In addition, the transmitter Tx of the transceiver 913 is further configured to: receive a modulated digital baseband signal or digital intermediate frequency signal from the processor 911, convert the modulated digital baseband signal or digital intermediate frequency signal into a radio frequency signal, and send the radio frequency signal through the one or more antennas 914. Specifically, the receiver Rx may selectively perform one-level or multi-level down frequency mixing processing and analog-to-digital conversion processing on the radio frequency signal, to obtain the digital baseband signal or the digital intermediate frequency signal. A sequence of the down frequency mixing processing and the analog-to-digital conversion processing is adjustable. The transmitter Tx may selectively perform one-level or multi-level up frequency mixing processing and digital-to-analog conversion processing on the modulated digital baseband signal or digital intermediate frequency signal, to obtain the radio frequency signal. A sequence of the up frequency mixing processing and the digital-to-analog conversion processing is adjustable. The digital baseband signal and the digital intermediate frequency signal may be collectively referred to as digital signals.

The transceiver may also be referred to as a transceiver unit, a transceiver machine, a transceiver apparatus, or the like. Optionally, a device configured to implement a receiving function in the transceiver unit may be considered as a receiving unit, and a device configured to implement a sending function in the transceiver unit may be considered as a sending unit. In other words, the transceiver unit includes the receiving unit and the sending unit. The receiving unit may also be referred to as a receiver, an input port, a receiving circuit, or the like. The sending unit may be referred to as a transmitter, a transmitter machine, a transmitting circuit, or the like.

It should be noted that the communication apparatus shown in FIG. 9 may be specifically configured to: implement steps implemented by the network device in any one of the foregoing method embodiments, and implement technical effects corresponding to the network device. For a specific implementation of the communication apparatus shown in FIG. 9, refer to the descriptions in any one of the foregoing method embodiments. Details are not described herein again.

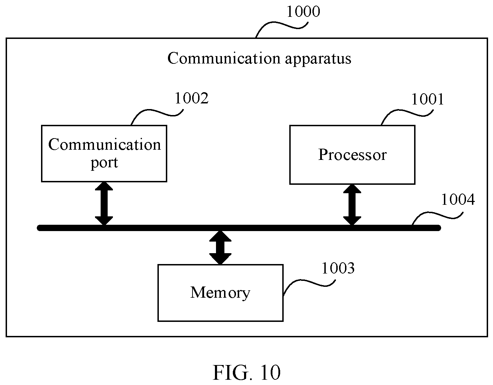

FIG. 10 is a diagram of a possible logical structure of a communication apparatus 1000 in the foregoing embodiments according to an embodiment of this application. The communication apparatus may specifically be the terminal device in the foregoing embodiments. The communication apparatus 1000 may include but is not limited to a processor 1001, a communication port 1002, a memory 1003, and a bus 1004. In this embodiment of this application, the processor 1001 is configured to control an action of the communication apparatus 1000.

In addition, the processor 1001 may be a central processing unit, a general-purpose processor, a digital signal processor, an application-specific integrated circuit, a field programmable gate array or another programmable logic device, a transistor logic device, a hardware component, or any combination thereof. The processor may implement or execute logic blocks, modules, and circuits in various examples described with reference to content disclosed in this application. Alternatively, the processor may be a combination of processors implementing a computing function, for example, a combination of one or more microprocessors, or a combination of a digital signal processor and a microprocessor. It may be clearly understood by persons skilled in the art that, for the purpose of convenient and brief description, for detailed working processes of the foregoing described system, apparatus, and unit, refer to corresponding processes in the foregoing method embodiments. Details are not described herein again.

It should be noted that the communication apparatus shown in FIG. 10 may be specifically configured to: implement steps implemented by the terminal device in any one of the foregoing method embodiments, and implement technical effects corresponding to the terminal device. For a specific implementation of the communication apparatus shown in FIG. 10, refer to the descriptions in any one of the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the communication apparatus in the foregoing embodiments. The communication apparatus may specifically be the network device in the foregoing embodiments.

An embodiment of this application further provides a computer-readable storage medium storing one or more computer-executable instructions. When the computer-executable instructions are executed by a processor, the processor performs the method in the possible implementations of the communication apparatus in the foregoing embodiments. The communication apparatus may specifically be the terminal device in the foregoing embodiments.

An embodiment of this application further provides a computer program product (or referred to as a computer program) storing one or more computer-executable instructions. When the computer program product is executed by a processor, the processor performs the method in the possible implementations of the foregoing communication apparatus. The communication apparatus may specifically be the network device in the foregoing embodiments.

An embodiment of this application further provides a computer program product storing one or more computer-executable instructions. When the computer program product is executed by a processor, the processor performs the method in the possible implementations of the foregoing communication apparatus. The communication apparatus may specifically be the terminal device in the foregoing embodiments.

An embodiment of this application further provides a chip system. The chip system includes a processor, configured to support a communication apparatus in implementing functions in the possible implementations of the foregoing communication apparatus. In a possible design, the chip system may further include a memory. The memory is configured to store program instructions and data that are necessary for the communication apparatus. The chip system may include a chip, or may include a chip and another discrete device. The communication apparatus may specifically be the network device in the foregoing embodiments.

An embodiment of this application further provides a chip system. The chip system includes a processor, configured to support a communication apparatus in implementing functions in the possible implementations of the foregoing communication apparatus. In a possible design, the chip system may further include a memory. The memory is configured to store program instructions and data that are necessary for the communication apparatus. The chip system may include a chip, or may include a chip and another discrete device. The communication apparatus may specifically be the terminal device in the foregoing embodiments.

An embodiment of this application further provides a network system architecture. The network system architecture includes the foregoing communication apparatus. The communication apparatus may specifically be the terminal device and the network device in any one of the foregoing embodiments.

In several embodiments provided in this application, it should be understood that the disclosed system, apparatus, and method may be implemented in another manner. For example, the foregoing described apparatus embodiments are merely examples. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, that is, may be located in one position, or may be distributed on a plurality of network units. Some or all of the units may be selected based on actual needs to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or some of the technical solutions may be implemented in a form of a software product. The computer software product is stored in a storage medium, and includes several instructions for enabling a computer device (which may be a personal computer, a server, a network device, or the like) to perform all or some steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make the essence of the corresponding technical solutions depart from the scope of the technical solutions of embodiments of this application.

**Claims**

1. A communication method, comprising:

   generating a first signal, wherein the first signal carries M amplitude shift keying modulation symbols, the first signal is one orthogonal frequency division multiplexing OFDM symbol in time domain, the first signal is a first frequency domain signal in frequency domain, bandwidth occupied by the first frequency domain signal is half of that occupied by a second frequency domain signal, the second frequency domain signal is a second signal in time domain, the second signal carries the M amplitude shift keying modulation symbols, duration of the M amplitude shift keying modulation symbols carried by the first signal is the same as that of the M amplitude shift keying modulation symbols carried by the second signal, and M is a positive integer; and
sending the first signal.

2. The method according to claim 1, wherein that duration of the M amplitude shift keying modulation symbols carried by the first signal is the same as that of the M amplitude shift keying modulation symbols carried by the second signal comprises at least one of the following:

duration of each of the M amplitude shift keying modulation symbols carried by the first signal is the same, and duration of each of the M amplitude shift keying modulation symbols carried by the second signal is the same; and/or
duration of an $i^{th}$ amplitude shift keying modulation symbol in the M amplitude shift keying modulation symbols carried by the first signal is the same as that of an $i^{th}$ amplitude shift keying modulation symbol in the M amplitude shift keying modulation symbols carried by the second signal, wherein i is a positive integer, and i is less than or equal to M.

3. The method according to claim 1 or 2, wherein the second frequency domain signal is a signal whose amplitude value is symmetrical about a first subcarrier, and a quantity of subcarriers of the bandwidth occupied by the second frequency domain signal is N; and

when N is an even number, the first subcarrier is an $(N/2)^{th}$ subcarrier or an $((N/2)+1)^{th}$ subcarrier; and a start location of the bandwidth occupied by the first frequency domain signal is the first subcarrier, and an end location of the bandwidth occupied by the first frequency domain signal is a last subcarrier of the bandwidth occupied by the second frequency domain signal; or a start location of the bandwidth occupied by the first frequency domain signal is a $2^{nd}$ subcarrier of the bandwidth occupied by the second frequency domain signal, and an end location of the bandwidth occupied by the first frequency domain signal is the first subcarrier; or

when N is an odd number, the first subcarrier is an $(\lfloor N/2 \rfloor + 1)^{th}$ subcarrier, and [N/2] represents taking the floor of N/2; and a start location of the bandwidth occupied by the first frequency domain signal is the first subcarrier, and an end location of the bandwidth occupied by the first frequency domain signal is a last subcarrier of the bandwidth occupied by the second frequency domain signal; or a start location of the bandwidth occupied by the first frequency domain signal is a $1^{st}$ subcarrier of the bandwidth occupied by the second frequency domain signal, and an end location of the bandwidth occupied by the first frequency domain signal is the first subcarrier.

4. The method according to any one of claims 1 to 3, wherein signals to which the first frequency domain signal and the second frequency domain signal are mapped in the bandwidth occupied by the first frequency domain signal are the same.

5. The method according to any one of claims 1 to 4, wherein the first signal meets at least one of the following:

a difference between a ratio of an amplitude value of a high level to an amplitude value of a low level in the first signal and a natural constant e is less than or equal to a first value;
an amplitude value of a high-level signal in the first signal is associated with an amplitude value of a high-level signal in the second signal, and an amplitude value of a low-level signal in the first signal is associated with an amplitude value of a low-level signal in the second signal;
an amplitude value of a high-level signal in the first signal is higher than an amplitude value of a high-level signal in the second signal; or
an amplitude value of a low-level signal in the first signal is higher than an amplitude value of a low-level signal in the second signal.

6. The method according to any one of claims 1 to 5, wherein a phase of the first signal is associated with a third signal, and the third signal is obtained through Hilbert transform of the second signal.

7. The method according to claim 6, wherein that a phase of the first signal is associated with a third signal comprises:
a value of the phase of the first signal is equal to that of the third signal, or a value of the phase of the first signal is directly proportional to that of the third signal.

8. The method according to claim 6 or 7, wherein the first signal satisfies:

$$a(t) = e^{s(t)+j\hat{s}(t)},$$

wherein
a(t) represents the first signal, e is the natural constant, s(t) represents the second signal, and ŝ(t) represents the third signal.

9. The method according to any one of claims 1 to 8, wherein the method further comprises:
sending first indication information, wherein the first indication information indicates that a signal modulation scheme is a single sideband modulation scheme.

10. A communication method, comprising:

receiving a first signal, wherein the first signal carries M amplitude shift keying modulation symbols, the first signal is one orthogonal frequency division multiplexing OFDM symbol in time domain, the first signal is a first frequency domain signal in frequency domain, bandwidth occupied by the first frequency domain signal is half of that occupied by a second frequency domain signal, the second frequency domain signal is a second signal in time domain, the second signal carries the M amplitude shift keying modulation symbols, duration of the M amplitude shift keying modulation symbols carried by the first signal is the same as that of the M amplitude shift keying modulation symbols carried by the second signal, and M is a positive integer; and
determining the M amplitude shift keying modulation symbols based on the first signal.

11. The method according to claim 10, wherein that duration of the M amplitude shift keying modulation symbols carried by the first signal is the same as that of the M amplitude shift keying modulation symbols carried by the second signal comprises at least one of the following:

duration of each of the M amplitude shift keying modulation symbols carried by the first signal is the same as that of each of the M amplitude shift keying modulation symbols carried by the second signal; or
duration of an $i^{th}$ amplitude shift keying modulation symbol in the M amplitude shift keying modulation symbols carried by the first signal is the same as that of an $i^{th}$ amplitude shift keying modulation symbol in the M amplitude shift keying modulation symbols carried by the second signal, wherein i is a positive integer, and i is less than or equal to M.

12. The method according to claim 10 or 11, wherein the second frequency domain signal is a signal whose amplitude value is symmetrical about a first subcarrier, and a quantity of subcarriers of the bandwidth occupied by the second frequency domain signal is N; and

when N is an even number, the first subcarrier is an $(N/2)^{th}$ subcarrier or an $((N/2)+1)^{th}$ subcarrier; and a start location of the bandwidth occupied by the first frequency domain signal is the first subcarrier, and an end location of the bandwidth occupied by the first frequency domain signal is a last subcarrier of the bandwidth occupied by the second frequency domain signal; or a start location of the bandwidth occupied by the first frequency domain signal is a $2^{nd}$ subcarrier of the bandwidth occupied by the second frequency domain signal, and an end location of the bandwidth occupied by the first frequency domain signal is the first subcarrier; or

when N is an odd number, the first subcarrier is an $(\lfloor N/2 \rfloor + 1)^{th}$ subcarrier, and [N/2] represents taking the floor of N/2; and a start location of the bandwidth occupied by the first frequency domain signal is the first subcarrier, and an end location of the bandwidth occupied by the first frequency domain signal is a last subcarrier of the bandwidth occupied by the second frequency domain signal; or a start location of the bandwidth occupied by the first frequency domain signal is a $1^{st}$ subcarrier of the bandwidth occupied by the second frequency domain signal, and an end location of the bandwidth occupied by the first frequency domain signal is the first subcarrier.

13. The method according to any one of claims 10 to 12, wherein a signal to which the first frequency domain signal is mapped in the bandwidth occupied by the first frequency domain signal is the same as that to which the second frequency domain signal is mapped in the bandwidth occupied by the first frequency domain signal.

**14.** The method according to any one of claims 10 to 13, wherein the first signal meets at least one of the following:

a difference between a ratio of an amplitude value of a high level to an amplitude value of a low level in the first signal and a natural constant e is less than or equal to a first value;

an amplitude value of a high-level signal in the first signal is associated with an amplitude value of a high-level signal in the second signal, and an amplitude value of a low-level signal in the first signal is associated with an amplitude value of a low-level signal in the second signal;

an amplitude value of a high-level signal in the first signal is higher than an amplitude value of a high-level signal in the second signal; or

an amplitude value of a low-level signal in the first signal is higher than an amplitude value of a low-level signal in the second signal.

**15.** The method according to any one of claims 10 to 14, wherein a signal obtained through Hilbert transform of the second signal is a third signal, and a phase of the first signal is associated with the third signal.

**16.** The method according to claim 15, wherein that a phase of the first signal is associated with the third signal comprises: a value of the phase of the first signal is equal to that of the third signal, or a value of the phase of the first signal is directly proportional to that of the third signal.

**17.** The method according to claim 15 or 16, wherein the first signal satisfies:

$$a(t) = e^{s(t)+j\hat{s}(t)},$$

wherein
a(t) represents the first signal, e is the natural constant, s(t) represents the second signal, and ŝ(t) represents the third signal.

**18.** The method according to any one of claims 10 to 17, wherein the method further comprises: receiving first indication information, wherein the first indication information indicates that a signal modulation scheme is a single sideband modulation scheme.

**19.** A communication apparatus, comprising a processing unit and a transceiver unit, wherein

the processing unit is configured to generate a first signal, wherein the first signal carries M amplitude shift keying modulation symbols, the first signal is one orthogonal frequency division multiplexing OFDM symbol in time domain, the first signal is a first frequency domain signal in frequency domain, bandwidth occupied by the first frequency domain signal is half of that occupied by a second frequency domain signal, the second frequency domain signal is a second signal in time domain, the second signal carries the M amplitude shift keying modulation symbols, duration of the M amplitude shift keying modulation symbols carried by the first signal is the same as that of the M amplitude shift keying modulation symbols carried by the second signal, and M is a positive integer; and
the transceiver unit is configured to send the first signal.

**20.** The apparatus according to claim 19, wherein that duration of the M amplitude shift keying modulation symbols carried by the first signal is the same as that of the M amplitude shift keying modulation symbols carried by the second signal comprises at least one of the following:

duration of each of the M amplitude shift keying modulation symbols carried by the first signal is the same as that of each of the M amplitude shift keying modulation symbols carried by the second signal; or

duration of an $i^{th}$ amplitude shift keying modulation symbol in the M amplitude shift keying modulation symbols carried by the first signal is the same as that of an $i^{th}$ amplitude shift keying modulation symbol in the M amplitude shift keying modulation symbols carried by the second signal, wherein i is a positive integer, and i is less than or equal to M.

**21.** The apparatus according to claim 19 or 20, wherein the second frequency domain signal is a signal whose amplitude value is symmetrical about a first subcarrier, and a quantity of subcarriers of the bandwidth occupied by the second frequency domain signal is N; and

when N is an even number, the first subcarrier is an $(N/2)^{th}$ subcarrier or an $((N/2)+1)^{th}$ subcarrier; and a start location of the bandwidth occupied by the first frequency domain signal is the first subcarrier, and an end location of the bandwidth occupied by the first frequency domain signal is a last subcarrier of the bandwidth occupied by the second frequency domain signal; or a start location of the bandwidth occupied by the first frequency domain signal is a $2^{nd}$ subcarrier of the bandwidth occupied by the second frequency domain signal, and an end location of the bandwidth occupied by the first frequency domain signal is the first subcarrier; or

when N is an odd number, the first subcarrier is an $(\lfloor N/2 \rfloor + 1)^{th}$ subcarrier, and [N/2] represents taking the floor of N/2; and a start location of the bandwidth occupied by the first frequency domain signal is the first subcarrier, and an end location of the bandwidth occupied by the first frequency domain signal is a last subcarrier of the bandwidth occupied by the second frequency domain signal; or a start location of the bandwidth occupied by the first frequency domain signal is a $1^{st}$ subcarrier of the bandwidth occupied by the second frequency domain signal, and an end location of the bandwidth occupied by the first frequency domain signal is the first subcarrier.

22. The apparatus according to any one of claims 19 to 21, wherein a signal to which the first frequency domain signal is mapped in the bandwidth occupied by the first frequency domain signal is the same as that to which the second frequency domain signal is mapped in the bandwidth occupied by the first frequency domain signal.

23. The apparatus according to any one of claims 19 to 22, wherein the first signal meets at least one of the following:

a difference between a ratio of an amplitude value of a high level to an amplitude value of a low level in the first signal and a natural constant e is less than or equal to a first value;
an amplitude value of a high-level signal in the first signal is associated with an amplitude value of a high-level signal in the second signal, and an amplitude value of a low-level signal in the first signal is associated with an amplitude value of a low-level signal in the second signal;
an amplitude value of a high-level signal in the first signal is higher than an amplitude value of a high-level signal in the second signal; or
an amplitude value of a low-level signal in the first signal is higher than an amplitude value of a low-level signal in the second signal.

24. The apparatus according to any one of claims 19 to 23, wherein a signal obtained through Hilbert transform of the second signal is a third signal, and a phase of the first signal is associated with the third signal.

25. The apparatus according to claim 24, wherein that a phase of the first signal is associated with the third signal comprises:
a value of the phase of the first signal is equal to that of the third signal, or a value of the phase of the first signal is directly proportional to that of the third signal.

26. The apparatus according to claim 24 or 25, wherein the first signal satisfies:

$$a(t) = e^{s(t)+j\hat{s}(t)},$$

wherein
a(t) represents the first signal, e is the natural constant, s(t) represents the second signal, and ŝ(t) represents the third signal.

27. The apparatus according to any one of claims 19 to 26, wherein
the transceiver unit is further configured to send first indication information, wherein the first indication information indicates that a signal modulation scheme is a single sideband modulation scheme.

28. A communication apparatus, comprising a processing unit and a transceiver unit, wherein

the transceiver unit is configured to receive a first signal, wherein the first signal carries M amplitude shift keying modulation symbols, the first signal is one orthogonal frequency division multiplexing OFDM symbol in time domain, the first signal is a first frequency domain signal in frequency domain, bandwidth occupied by the first frequency domain signal is half of that occupied by a second frequency domain signal, the second frequency domain signal is a second signal in time domain, the second signal carries the M amplitude shift keying modulation symbols, duration of the M amplitude shift keying modulation symbols carried by the first signal is the same as that of the M amplitude shift keying modulation symbols carried by the second signal, and M is a positive integer; and the processing unit is configured to determine, based on the first signal, bit information corresponding to the M amplitude shift keying modulation symbols.

29. The apparatus according to claim 28, wherein that duration of the M amplitude shift keying modulation symbols carried by the first signal is the same as that of the M amplitude shift keying modulation symbols carried by the second signal comprises at least one of the following:

duration of each of the M amplitude shift keying modulation symbols carried by the first signal is the same as that of each of the M amplitude shift keying modulation symbols carried by the second signal; or
duration of an $i^{th}$ amplitude shift keying modulation symbol in the M amplitude shift keying modulation symbols carried by the first signal is the same as that of an $i^{th}$ amplitude shift keying modulation symbol in the M amplitude shift keying modulation symbols carried by the second signal, wherein i is a positive integer, and i is less than or equal to M.

30. The apparatus according to claim 28 or 29, wherein the second frequency domain signal is a signal whose amplitude value is symmetrical about a first subcarrier, and a quantity of subcarriers of the bandwidth occupied by the second frequency domain signal is N; and

when N is an even number, the first subcarrier is an $(N/2)^{th}$ subcarrier or an $((N/2)+1)^{th}$ subcarrier; and a start location of the bandwidth occupied by the first frequency domain signal is the first subcarrier, and an end location of the bandwidth occupied by the first frequency domain signal is a last subcarrier of the bandwidth occupied by the second frequency domain signal; or a start location of the bandwidth occupied by the first frequency domain signal is a $2^{nd}$ subcarrier of the bandwidth occupied by the second frequency domain signal, and an end location of the bandwidth occupied by the first frequency domain signal is the first subcarrier; or

when N is an odd number, the first subcarrier is an $\left(\lfloor N/2 \rfloor + 1\right)^{th}$ subcarrier, and [N/2] represents taking the floor of N/2; and a start location of the bandwidth occupied by the first frequency domain signal is the first subcarrier, and an end location of the bandwidth occupied by the first frequency domain signal is a last subcarrier of the bandwidth occupied by the second frequency domain signal; or a start location of the bandwidth occupied by the first frequency domain signal is a $1^{st}$ subcarrier of the bandwidth occupied by the second frequency domain signal, and an end location of the bandwidth occupied by the first frequency domain signal is the first subcarrier.

31. The apparatus according to any one of claims 28 to 30, wherein a signal to which the first frequency domain signal is mapped in the bandwidth occupied by the first frequency domain signal is the same as that to which the second frequency domain signal is mapped in the bandwidth occupied by the first frequency domain signal.

32. The apparatus according to any one of claims 28 to 31, wherein the first signal meets at least one of the following:

a difference between a ratio of an amplitude value of a high level to an amplitude value of a low level in the first signal and a natural constant e is less than or equal to a first value;
an amplitude value of a high-level signal in the first signal is associated with an amplitude value of a high-level signal in the second signal, and an amplitude value of a low-level signal in the first signal is associated with an amplitude value of a low-level signal in the second signal;
an amplitude value of a high-level signal in the first signal is higher than an amplitude value of a high-level signal in the second signal; or
an amplitude value of a low-level signal in the first signal is higher than an amplitude value of a low-level signal in the second signal.

33. The apparatus according to any one of claims 28 to 32, wherein a signal obtained through Hilbert transform of the second signal is a third signal, and a phase of the first signal is associated with the third signal.

34. The apparatus according to claim 33, wherein that a phase of the first signal is associated with the third signal comprises:
a value of the phase of the first signal is equal to that of the third signal, or a value of the phase of the first signal is directly proportional to that of the third signal.

35. The apparatus according to claim 33 or 34, wherein the first signal satisfies:

$$a(t) = e^{s(t)+j\hat{s}(t)},$$

wherein
a(t) represents the first signal, e is the natural constant, s(t) represents the second signal, and ŝ(t) represents the third signal.

36. The apparatus according to any one of claims 28 to 35, wherein the apparatus further comprises:
receiving first indication information, wherein the first indication information indicates that a signal modulation scheme is a single sideband modulation scheme.

37. A communication apparatus, comprising at least one processor and an interface circuit, wherein

the interface circuit is configured to provide a program or instructions for the at least one processor; and
the at least one processor is configured to execute the program or the instructions, to enable the communication apparatus to implement the method according to any one of claims 1 to 9, or enable the communication apparatus to implement the method according to any one of claims 10 to 18.

38. A computer-readable storage medium, wherein the computer-readable storage medium stores instructions, and when the instructions are executed by a computer, the method according to any one of claims 1 to 18 is implemented.

39. A computer program product, comprising instructions, wherein when the instructions are run on a computer, the computer is enabled to perform the method according to any one of claims 1 to 18.

40. A communication system, comprising a signal sending device and a signal receiving device, wherein the signal sending device is configured to perform the method according to any one of claims 1 to 9, and the signal receiving device is configured to perform the method according to any one of claims 10 to 18.

FIG. 1

FIG. 2a

BS 1

Tag

FIG. 2b

UE

Tag

FIG. 2c

Symbol duration:
11.1 μs

Frequency domain conversion

Time-frequency conversion

180 kHz

(a)

90 kHz

(b)

(c)

FIG. 3

```
┌─────────────────┐                    ┌─────────────────┐
│ Signal sending  │                    │ Signal receiving│
│     device      │                    │     device      │
└─────────────────┘                    └─────────────────┘
        │                                      │
┌──────────────────────────────┐               │
│ S401: Generate a first signal │              │
└──────────────────────────────┘               │
        │                                      │
        │          S402: First signal          │
        │ ───────────────────────────────────> │
        │                                      │
```

FIG. 4

Subcarrier index    0    ...    ...    k    k+1    ...    ...    ...    2k–1

FIG. 5a

Subcarrier index    0    ...    ...    k    k+1    ...    ...    ...    2k–1    2k

FIG. 5b

```
    ┌─ A1                              ┌─ A2
┌────────────────────┐          ┌────────────────────┐
│ Map a second       │          │ Perform IFFT       │
│ frequency          │          │ transform          │
│ domain signal to p │ ───────> │ on the second      │
│ RBs in             │          │ frequency          │
│ frequency domain   │          │ domain signal to   │
│                    │          │ obtain a           │
│                    │          │ second signal      │
└────────────────────┘          └────────────────────┘
```

FIG. 6a

B1

Obtain a second
frequency domain
signal

B2

Obtain a first frequency
domain signal based on
the second frequency
domain signal

B3

Obtain a first signal
based on the first
frequency domain
signal

FIG. 6b

FIG. 6c

360 kHz
(a)

180 kHz
(b)

360 kHz
(a)

180 kHz
(c)

FIG. 6d

C1

Obtain a second
signal

C2

Generate a signal
m(t) in time
domain

C3

Generate a signal
$e^{m(t)}$ in time
domain based on
the signal m(t)

FIG. 6e

D1

Obtain a
second signal

D2

Determine a
signal m(t) in
time domain

D3

Determine a
signal $e^{m(t)}$ in
time domain

D4

Use a signal of the signal
$e^{m(t)}$ in frequency domain
as a first frequency
domain signal, and
generate a first signal
based on the first
frequency domain signal

FIG. 6f

E1

Map a second frequency domain signal to p RBs in frequency domain

E2

Perform IFFT transform on the second frequency domain signal to obtain a signal $e^{s(t)}$

E3

Multiply the signal $e^{s(t)}$ by a phase factor to obtain a first signal

FIG. 6g

FIG. 6h

| Signal sending device | | Signal receiving device |
|---|---|---|

S701: Generate a first signal

S702: First signal

FIG. 7

800

Communication apparatus

801

Processing unit

802

Transceiver unit

FIG. 8

914

913

Tx

Processor

911

Rx

912

Memory

FIG. 9

FIG. 10

<table>
<tr><td colspan="2">**INTERNATIONAL SEARCH REPORT**</td><td colspan="2">International application No.<br>**PCT/CN2023/095749**</td></tr>
</table>

**A.　CLASSIFICATION OF SUBJECT MATTER**

H04L 27/26(2006.01)i

According to International Patent Classification (IPC) or to both national classification and IPC

**B.　FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

3GPP, CNTXT, ENTXTC, USTXT, WOTXT, CNKI: 幅移键控, 开关键控, 符号, 承载, 携带, 持续, 时域, 频域, 第一, 第二, 一半, 相同, 效率, ASK, OOK, symbol, OFDM, carry, duration, time, frequency, first, second, half, same, efficiency

**C.　DOCUMENTS CONSIDERED TO BE RELEVANT**

| Category* | Citation of document, with indication, where appropriate, of the relevant passages | Relevant to claim No. |
|---|---|---|
| A | WO 2019174718 A1 (TELEFONAKTIEBOLAGET LM ERICSSON (PUBL)) 19 September 2019 (2019-09-19)<br>entire document | 1-40 |
| A | WO 2020200428 A1 (TELEFONAKTIEBOLAGET LM ERICSSON (PUBL)) 08 October 2020 (2020-10-08)<br>entire document | 1-40 |
| A | RU 2705357 C1 (ZAKRYTOE AKTSIONERNOE OBSHCHESTVO INST TELEKOMMUNIKATSIJ) 07 November 2019 (2019-11-07)<br>entire document | 1-40 |
| A | InterDigital, Inc. "R1-2004318 Orthogonal ON-OFF keying for wake-up signal design"<br>*3GPP tsg_ran\wg1_rl1*, 16 May 2020 (2020-05-16),<br>entire document | 1-40 |
| T | CN 116266806 A (HUAWEI TECHNOLOGIES CO., LTD.) 20 June 2023 (2023-06-20)<br>entire document | 1-40 |
| T | WO 2023109920 A1 (HUAWEI TECHNOLOGIES CO., LTD.) 22 June 2023 (2023-06-22)<br>entire document | 1-40 |

☐ Further documents are listed in the continuation of Box C.　　☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **05 September 2023** | **06 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**
**Information on patent family members**

</div>

International application No.

**PCT/CN2023/095749**

| Patent document cited in search report | | | Publication date (day/month/year) | Patent family member(s) | | | Publication date (day/month/year) |
|---|---|---|---|---|---|---|---|
| WO | 2019174718 | A1 | 19 September 2019 | EP | 3766196 | A1 | 20 January 2021 |
| | | | | EP | 3766196 | B1 | 22 June 2022 |
| | | | | US | 2021044465 | A1 | 11 February 2021 |
| | | | | US | 11218346 | B2 | 04 January 2022 |
| WO | 2020200428 | A1 | 08 October 2020 | US | 2022191075 | A1 | 16 June 2022 |
| | | | | EP | 3949300 | A1 | 09 February 2022 |
| RU | 2705357 | C1 | 07 November 2019 | None | | | |
| CN | 116266806 | A | 20 June 2023 | None | | | |
| WO | 2023109920 | A1 | 22 June 2023 | None | | | |

Form PCT/ISA/210 (patent family annex) (July 2022)

**EP 4 535 740 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210682571